(19) Europäisches Patentamt
European Patent Office
Office européen des brevets

(11) **EP 4 111 147 B1**

(12) **FASCICULE DE BREVET EUROPEEN**

(45) Date de publication et mention
de la délivrance du brevet:
**09.04.2025 Bulletin 2025/15**

(21) Numéro de dépôt: **21708201.5**

(22) Date de dépôt: **25.02.2021**

(51) Classification Internationale des Brevets (IPC):
**G01J 3/28** *(2006.01)*     **G01J 3/44** *(2006.01)*
**G01J 3/02** *(2006.01)*

(52) Classification Coopérative des Brevets (CPC):
**G01J 3/2823; G01J 3/0248; G01J 3/28; G01J 3/44;
G01J 3/4406**

(86) Numéro de dépôt international:
**PCT/EP2021/054681**

(87) Numéro de publication internationale:
**WO 2021/170717 (02.09.2021 Gazette 2021/35)**

(54) **PROCÉDÉ D'ACQUISITION ET DE FORMATION D'UNE IMAGE DE SPECTROMÉTRIE ET APPAREIL DE MESURE SPECTROSCOPIQUE**

VERFAHREN ZUR ERFASSUNG UND BILDUNG EINES SPEKTROMETRISCHEN BILDES UND SPEKTROSKOPISCHE MESSVORRICHTUNG

METHOD FOR ACQUIRING AND FORMING A SPECTROMETRY IMAGE AND SPECTROSCOPIC MEASURING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.02.2020 FR 2001912**

(43) Date de publication de la demande:
**04.01.2023 Bulletin 2023/01**

(73) Titulaire: **Horiba France SAS**
**91120 Palaiseau (FR)**

(72) Inventeurs:
• **LADEN, Sébastien**
**59910 BONDUES (FR)**
• **KOKOTA, Alexandre**
**59260 LEZENNES (FR)**

(74) Mandataire: **Jacobacci Coralis Harle**
**32, rue de l'Arcade**
**75008 Paris (FR)**

(56) Documents cités:
**US-A1- 2019 086 262**

• **K. KONG ET AL: "Diagnosis of tumors during tissue-conserving surgery with integrated autofluorescence and Raman scattering microscopy", PROCEEDINGS OF THE NATIONAL ACADEMY OF SCIENCES, vol. 110, no. 38, 3 September 2013 (2013-09-03), pages 15189 - 15194, XP055174821, ISSN: 0027-8424, DOI: 10.1073/pnas.1311289110**
• **CHRISTOPHER J. ROWLANDS ET AL: "Rapid acquisition of Raman spectral maps through minimal sampling: applications in tissue imaging", JOURNAL OF BIOPHOTONICS, vol. 5, no. 3, 20 December 2011 (2011-12-20), DE, pages 220 - 229, XP055446825, ISSN: 1864-063X, DOI: 10.1002/jbio.201100098**
• **SHO TAKAMORI ET AL: "Optimization of multimodal spectral imaging for assessment of resection margins during Mohs micrographic surgery for basal cell carcinoma", BIOMEDICAL OPTICS EXPRESS, vol. 6, no. 1, 1 January 2015 (2015-01-01), United States, pages 98, XP055748943, ISSN: 2156-7085, DOI: 10.1364/BOE.6.000098**

**Description**

[DOMAINE TECHNIQUE AUQUEL SE RAPPORTE L'INVENTION

La présente invention concerne de manière générale le domaine des méthodes et instruments d'acquisition d'image spectrale ou hyperspectrale d'un échantillon, basés sur l'utilisation de techniques de mesure point par point de spectrométrie Raman, de fluorescence, de photoluminescence ou de cathodo-luminescence et de reconstruction d'image.

Elle concerne plus particulièrement une méthode d'acquisition et la formation d'une image spectrale ou hyperspectrale d'un échantillon.

Elle concerne en particulier une méthode pour l'acquisition et la reconstruction rapide d'une image d'un échantillon en micro-spectroscopie Raman, l'image de haute résolution spatiale étant formée point par point.

Elle concerne également un appareil de mesure spectroscopique conçu pour mettre en œuvre un tel procédé.

ARRIERE-PLAN TECHNOLOGIQUE

Une mesure ponctuelle de spectrométrie suffit en général pour l'analyse d'un échantillon spatialement homogène. Par contre, dans le cas d'un échantillon spatialement inhomogène, il est souhaitable d'effectuer des mesures de spectrométrie sous forme d'image construite point par point avec une résolution spatiale adaptée en fonction de la structure ou des microstructures de l'échantillon.

On connaît différentes techniques d'imagerie par spectrométrie, basées sur l'acquisition point par point de spectres et sur la reconstruction d'une image de spectrométrie résolue spatialement. Ces systèmes nécessitent un déplacement de l'échantillon par rapport à l'instrument de mesure et à un faisceau d'excitation focalisé en un point, ou un balayage du faisceau d'excitation par rapport à l'échantillon, ou encore une combinaison d'un balayage du faisceau et d'un déplacement de l'échantillon.

Dans un système d'imagerie de micro-spectrométrie Raman basé sur un déplacement de l'échantillon, l'échantillon est placé sur une platine motorisée ou munie d'actionneurs piézo-électriques, pour déplacer l'échantillon suivant deux directions transverses (XY). Le faisceau d'excitation laser est focalisé sur l'échantillon, sur une zone d'environ 1 micromètre de diamètre. Le déplacement de l'échantillon suit généralement une grille périodique ayant un pas constant en X et en Y. Un spectre est acquis à chaque nouvelle position de l'échantillon. Un logiciel de traitement reconstruit une image hyperspectrale à partir de cet ensemble de mesures.

Quel que soit le type de déplacement choisi, la durée d'acquisition d'une image point par point est déterminée par la durée d'acquisition de chaque point et par le nombre de points de l'image. La durée d'acquisition de chaque point est liée à la luminosité et à la résolution spectrale de chaque point. Le nombre de points de l'image dépend du pas de déplacement de l'échantillon par rapport au faisceau d'excitation ou de ce faisceau par rapport à l'échantillon qui détermine la résolution spatiale de l'image.

L'acquisition d'un seul spectre Raman prend généralement entre 0.1 ms à 1 minute, et en moyenne 1 seconde. Pour obtenir une image de haute résolution spatiale et spectrale, la durée d'acquisition d'une image de microspectrométrie Raman peut atteindre plusieurs heures ou même plusieurs dizaines d'heures. Ces durées sont inadaptées pour l'analyse de nombreux échantillons.

Les principales options pour réduire la durée d'acquisition d'image de spectrométrie sont la réduction de la durée d'acquisition de chaque point et la réduction du nombre de points dans une image.

Toutefois, ces options conduisent généralement à une perte de qualité de l'image reconstruite, une diminution du rapport signal à bruit de chaque point et/ou une diminution de la résolution spatiale de l'image reconstruite.

Dans certaines applications, il est souhaitable de réduire la durée d'acquisition d'une image de microspectrométrie ou d'une image hyperspectrale sans perte de luminosité, de rapport signal à bruit, de résolution spectrale ni de résolution spatiale sur l'image reconstruite point par point.

Dans d'autres applications, il est souhaitable d'augmenter la résolution spatiale d'une image hyperspectrale ou d'une image de microspectrométrie sans augmenter la durée d'acquisition de cette image.

Le document "Diagnosis of tumors during tissue-conserving surgery with integrated autofluorescence and Raman scattering microscopy", Kong et al. 2013, PNAS, vol. 110, no. 38, p. 15189-15194 (XP055174821) et la demande de brevet US2019/0086262A1 présentent des exemples de l'état de la technique.

OBJET DE L'INVENTION

Dans ce contexte, la présente invention propose un procédé d'acquisition et de formation d'une image de spectrométrie d'un échantillon comprenant les étapes suivant :

e1) acquisition d'une image initiale d'une zone de l'échantillon, l'image initiale étant composée de pixels, et définition d'un ensemble maximal de N, $2 \leq N$, positions de mesure de spectrométrie, chaque position de mesure comprenant au moins une coordonnée, représentative de la position de mesure par rapport à la zone de l'échantillon, et au moins une intensité, déterminée sur la base d'au moins un pixel de l'image initiale situé dans un voisinage de la position de mesure ;

e2) attribution d'une valeur de classement à chacune des N positions de mesure sur la base d'écarts entre les positions de mesure, un écart entre deux positions de mesure étant calculé sur la base d'une différence d'intensité et d'une différence de coordonnées ;

e3) détermination d'un groupe de P, $1 \leq P \leq N$, positions de mesure parmi l'ensemble des N positions de mesure en fonction des valeurs de classement attribuées à l'étape e2) ;

e4) successivement, pour chaque position de mesure du groupe déterminée à l'étape e3), positionnement d'un faisceau d'excitation en ladite position de mesure sur la zone de l'échantillon, acquisition d'une mesure de spectrométrie et construction de l'image de spectrométrie sur la base de la ou des mesures de spectrométrie acquises.

Ici, une position de mesure représente un positionnement particulier du faisceau d'excitation par rapport à l'échantillon dans le but de réaliser une mesure de spectrométrie.

Ainsi, grâce au procédé de formation et d'acquisition d'une image de spectrométrie, des valeurs de classement sont attribuées aux positions de mesure. La valeur de classement d'une position de mesure permet de quantifier la contribution de la position de mesure pour la formation de l'image de spectrométrie. La contribution d'une position de mesure est une estimation du poids, c'est-à-dire de l'importance, de la mesure de spectrométrie acquise à cette position de mesure, dans la formation de l'image de spectrométrie.

La contribution d'une position de mesure est déterminée sur la base de l'image initiale. La contribution d'une position de mesure est déterminée par rapport à la localisation de la position de mesure sur l'échantillon. Par exemple, les positions de mesure situées dans une zone de l'échantillon présentant de fortes variations d'intensité sont considérées comme plus contributives que les positions de mesure situées dans une zone de l'échantillon d'intensité constante. En d'autres termes, une zone de l'échantillon d'intensité uniforme peut être estimée de façon précise par une mesure de spectrométrie alors qu'une zone présentant de fortes variations spatiales d'intensité doit être estimée par plusieurs mesures de spectrométrie.

Ce procédé permet donc d'organiser ou d'ordonner les positions de mesure, par exemple de la plus contributive à la moins contributive, en leur attribuant des valeurs de classement.

Une fois les positions de mesures organisées, il est possible d'acquérir des mesures de spectrométrie en commençant par les positions de mesure les plus contributives. L'image de spectrométrie peut alors être construite progressivement et mise à jour à chaque nouvelle acquisition d'une mesure de spectrométrie.

En conséquence, lors de l'acquisition et de la formation de l'image de spectrométrie, les zones de l'échantillon présentant de fortes variations spatiales d'intensité obtiennent prioritairement une résolution spatiale plus élevée (sur l'image de spectrométrie) que les zones de l'échantillon d'intensité constante spatialement. La qualité de l'image de spectrométrie est donc rapidement satisfaisante même après peu d'acquisitions

Ainsi, acquérir en priorité des mesures de spectrométrie aux positions de mesure les plus contributives permettre d'obtenir une qualité élevée pour un facteur d'accélération donné ou pour un temps d'acquisition donné. Par exemple, pour un facteur d'accélération donné, le procédé permet d'obtenir une image de spectrométrie de meilleure qualité qu'avec une répartition sur une grille régulière prédéterminée des positions de mesure à acquérir.

L'acquisition de nouvelles mesures de spectrométrie peut aussi être arrêtée quand la qualité de l'image est jugée satisfaisante par un utilisateur.

L'acquisition de nouvelles mesures de spectrométrie peut aussi être arrêtée une fois qu'un facteur d'accélération déterminé est atteint. Le facteur d'accélération, qui est parfois appelé taux de compression, est défini comme le rapport entre le nombre maximum de positions de mesure selon la résolution spatiale de l'appareil de spectrométrie et le nombre de mesures de spectrométrie acquises. Un facteur d'accélération donné est donc inversement proportionnel à un nombre donné de mesures acquises.

D'autres caractéristiques non limitatives et avantageuses du procédé conforme à l'invention, prises individuellement ou selon toutes les combinaisons techniquement possibles, sont les suivantes :

- les valeurs de classement attribuées à l'étape e2) sont toutes différentes les unes des autres ;
- l'écart entre deux positions de mesure est calculé sur la base d'une somme pondérée du carré de la différence d'intensité entre les deux positions de mesure et du carré de la différence de coordonnée entre les deux positions de mesure ;
- à l'étape e3), les P positions de mesure du groupe sont déterminées en fonction d'un ordre croissant, respectivement décroissant, des valeurs de classement ;

- à l'étape e2), une liste S comprenant les positions de mesure dont la valeur de classement reste à attribuer et une liste U comprenant les positions de mesure dont la valeur de classement est attribuée sont initialisées, et les étapes suivantes e21) et e22) sont itérées :

  e21) pour chaque position de mesure de la liste S, détermination d'une erreur totale en itérant les étapes e211), e212) et e213) de :

  e211) déplacement d'une position de mesure considérée de la liste S à la liste U ;
  e212) calcul de l'erreur totale associée à la position de mesure considérée sur la base d'écarts entre des positions de mesure de la liste S et des positions de mesure de la liste U ;
  e213) déplacement la position de mesure considérée de la liste U à la liste S ;

  e22) sélection d'une position de mesure de la liste S sur la base de chaque erreur totale déterminée à l'étape e21), attribution d'une valeur de classement à la position de mesure sélectionnée et déplacement de la position de mesure sélectionnée de la liste S à la liste U ;

- une valeur de classement est initialisée à une valeur prédéterminée et à chaque itération de l'étape e22), une valeur de classement strictement inférieure, respectivement supérieure, à la valeur de classement la plus faible, respectivement la plus élevée, est attribuée à la position de mesure possédant l'erreur totale la plus faible ;
- à l'étape e212), la détermination de l'erreur totale associée à la position de mesure considérée comprend les étapes suivantes :

  e2121) pour chaque position de mesure de la liste U, détermination de la position de mesure de la liste S avec laquelle l'écart est minimum, la valeur de l'écart entre ces deux positions de mesure définissant un écart minimum ;
  e2122) calcul de l'erreur totale sur la base de chaque écart minimum déterminé à l'étape e2121) ;

- le groupe comprend au moins trois positions de mesure et dans lequel une trajectoire pour effectuer les positionnements successifs du faisceau d'excitation est prédéterminée ;
- les étapes e3) et e4) sont itérées et dans lequel à chaque nouvelle itération, le groupe déterminé à l'étape e3) comprend uniquement des positions de mesure pour lesquelles une mesure de spectrométrie reste à acquérir ;
- ledit procédé comprend une étape e11) d'acquisition d'au moins une mesure de spectrométrie en au moins une position de mesure prédéterminée, une valeur de classement prédéterminée est attribuée à chaque au moins une position de mesure prédéterminée ;
- la construction de l'image de spectrométrie comprend les étapes suivantes :

  e41) pour chaque position de mesure pour laquelle une mesure de spectrométrie a été acquise, détermination d'une valeur de spectrométrie sur la base de ladite mesure de spectrométrie ;
  e42) pour chaque position de mesure restante, détermination d'une valeur de spectrométrie sur la base d'au moins une mesure de spectrométrie sélectionnée, qui est sélectionnée en fonction de la différence de coordonnées entre ladite position de mesure de restante et la position de mesure à laquelle ladite au moins une mesure de spectrométrie sélectionnée a été acquise ;

- à l'étape e42), les mesures de spectrométries sélectionnées sont les mesures de spectrométrie acquises à des positions de mesure possédant une différence de coordonnées avec ladite position de mesure restante inférieure à une valeur seuil ;
- à l'étape e42), la valeur de spectrométrie est déterminée sur la base de chaque mesure de spectrométrie sélectionnée pondérée par l'écart entre la position de mesure à laquelle la mesure de spectrométrie sélectionnée a été acquise et ladite position de mesure restante ;
- ledit procédé comprend une étape e43) d'interpolation de l'image de spectrométrie dans laquelle une pluralité de coefficients d'interpolation sont déterminés sur la base des écarts entre les positions de mesure ;
- ledit procédé comprend une mesure d'arrêt pour mettre fin, à l'étape e4), à l'acquisition de mesures de spectrométrie supplémentaires ;
- le nombre de mesures de spectrométrie à acquérir est prédéterminé ;
- une région d'intérêt, comprenant une partie seulement des positions de mesure, est prédéterminée dans l'image initiale, et à l'étape e3) le groupe est déterminé sur la base des positions de mesure appartenant à la région d'intérêt ;
- au moins une mesure de spectrométrie est intégrée spatialement sur un secteur de l'échantillon ;
- initiale est acquise selon l'une des modalités d'imagerie suivantes : acquisition spectroscopique à une ou plusieurs bandes spectrales prédéterminées ; acquisition optique en réflexion ou en transmission ; acquisition hyperspectrale ; acquisition de microscope à force atomique ; acquisition de microscope électronique à balayage.

L'invention propose également un appareil de mesure spectroscopique comprenant :

- une source de lumière conçue pour générer un faisceau d'excitation ;
- un support adapté à recevoir un échantillon ;
- un dispositif de capture d'image ;
- un processeur programmé pour mettre en œuvre les étapes e1) à e4) du procédé d'acquisition et de formation d'une image de spectrométrie.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

Sur les dessins annexés :

[Fig. 1] est une représentation schématique d'un instrument d'imagerie à balayage de faisceau ;

[Fig. 2] est une représentation schématique d'une grille de distribution spatiale de positions de mesure dans un plan XY de l'échantillon ;

[Fig. 3] est un schéma bloc d'une séquence d'étapes permettent l'acquisition et la formation d'une image de spectrométrie ;

[Fig. 4] illustre une image initiale d'un échantillon ;

[Fig. 5] est un grossissement de l'image initiale de la figure 4 avec une distribution des positions de mesure ;

[Fig. 6] représente un exemple de classement de positions de mesure par rapport à une image initiale simulée ;

[Fig. 7A] illustre une image de spectrométrie Raman de l'échantillon de la figure 4 construite grâce au procédé de la figure 3 pour un facteur d'accélération de 100 ;

[Fig. 7B] illustre une image de spectrométrie Raman de l'échantillon de la figure 4 construite grâce au procédé de la figure 3 pour un facteur d'accélération de 50 ;

[Fig. 7C] illustre une image de spectrométrie Raman de l'échantillon de la figure 4 construite grâce au procédé de la figure 3 pour un facteur d'accélération de 20 ;

[Fig. 7D] illustre une image de spectrométrie Raman de l'échantillon de la figure 4 construite grâce au procédé de la figure 3 pour un facteur d'accélération de 10 ;

[Fig. 7E] illustre une image de spectrométrie Raman de l'échantillon de la figure 4 construite grâce au procédé de la figure 3 pour un facteur d'accélération de 5 ;

[Fig. 7F] illustre une image de spectrométrie Raman de l'échantillon de la figure 4 construite grâce au procédé de la figure 3 pour un facteur d'accélération de 1 ;

[Fig. 8] illustre l'image initiale de la figure 4 avec une distribution de pixels sources et leurs maillages associés pour un facteur d'accélération de 20 ;

[Fig. 9] illustre une image structurelle estimée, pour un facteur d'accélération de 20, construite sur la base de l'image initiale de la figure 4 et de la distribution de pixels sources de la figure 8 ;

[Fig. 10] est un grossissement de l'image de spectrométrie de la figure 7C correspondant à l'image structurelle estimée de la figure 9 au même facteur d'accélération de 20 ;

[Fig. 11A] illustre une étape d'interpolation effectuée sur l'image de spectrométrie Raman de la figure 7A ;

[Fig. 11B] illustre une étape d'interpolation effectuée sur l'image de spectrométrie Raman de la figure 7B.

Dispositif

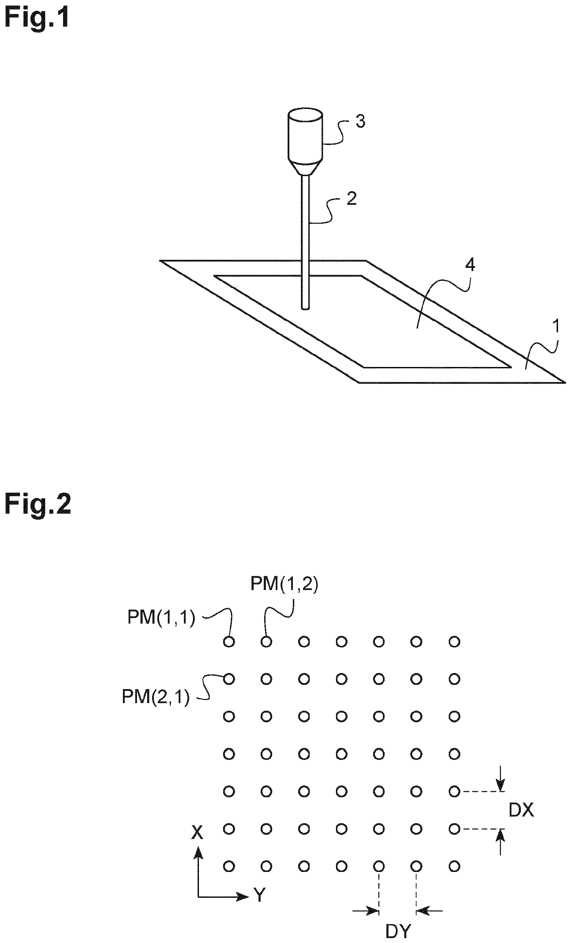

Sur la figure 1, on a représenté schématiquement un exemple d'instrument d'analyse basé sur un microscope à balayage de faisceau destiné à positionner un faisceau d'excitation incident 2 séquentiellement en différents points d'un échantillon 1. Un tel microscope à balayage comporte un système de platine de déplacement pour déplacer l'échantillon 1 par rapport au faisceau d'excitation 2 qui reste fixe. Ce mode de déplacement relatif du faisceau d'excitation 2 par rapport à l'échantillon permet un positionnement du faisceau d'excitation 2 précis. D'autres microscopes comportent un dispositif de balayage (généralement un scanner) pour faire varier l'angle d'incidence du faisceau d'excitation par rapport à l'échantillon qui reste fixe pendant le balayage du faisceau d'excitation. Enfin, certains microscopes combinent un balayage du faisceau d'excitation et un déplacement de l'échantillon afin de couvrir une surface d'analyse ayant une plus grande étendue spatiale.

De manière générale, un microscope d'imagerie de spectrométrie point par point est configuré pour effectuer un déplacement relatif d'un faisceau d'excitation 2 par rapport à l'échantillon 1, de manière à diriger le faisceau d'excitation 2 séquentiellement en différents points de l'échantillon 1 à analyser. Ces différents points de l'échantillon 1 à analyser et où le faisceau d'excitation 2 peut être placé, correspondent ici aux positions de mesure, notées PM. Plus précisément, les positions de mesure forment un ensemble maximum de positions de mesure. Comme détaillé ci-dessous, le procédé de la présente divulgation permet de sélectionner, parmi ces N positions de mesure, les positions de mesure les plus contributives auxquelles sont prioritairement acquises les mesures de spectrométrie et de déterminer l'ordre dans lequel ces mesures sont acquises. Le procédé vise en effet à acquérir un nombre effectif de mesures de spectrométrie inférieur au nombre maximum N, pour réduire la durée totale d'acquisition, tout en produisant une image de spectrométrie de bonne qualité, c'est-à-dire de haute résolution dans les zones les plus contributives de l'échantillon.

L'instrument d'analyse comporte aussi un dispositif de spectrométrie, qui permet d'acquérir un signal de spectrométrie à chaque position de mesure PM. Le signal de spectrométrie en un point de l'échantillon 1 est appelé mesure de spectrométrie.

L'instrument d'analyse comporte enfin un calculateur et un logiciel de traitement pour former, grâce aux mesures de spectrométrie, une image de spectrométrie hyperspectrale ou encore une ou plusieurs images de l'échantillon 1 dans différentes bandes spectrales ou à différentes longueurs d'onde. Chaque point de l'image hyperspectrale représente donc une mesure de spectrométrie, par exemple un spectre de diffusion Raman, un spectre de fluorescence, un spectre de photoluminescence ou un spectre de cathodo-luminescence.

La figure 2 illustre un exemple classique de grille de positions de mesure PM auxquelles positionner le faisceau d'excitation 2. Les positions de mesure PM sont représentées par des disques ou spot de mesure 6 dans un plan (XY) d'un repère orthonormé en surface d'un échantillon. La grille est en générale régulière, rectangulaire ou carrée, avec un pas DX suivant l'axe X et un pas DY suivant l'axe Y. Le pas DX est en général choisi égal au pas DY.

Une manière classique de former une image de spectrométrie est de placer le faisceau incident 2 en une position de mesure PM(1,1) et d'acquérir une première mesure de spectrométrie, puis de déplacer le faisceau d'excitation en une position de mesure PM(1,2) d'acquérir une deuxième mesure de spectrométrie. On peut alors répéter les opérations de déplacement relatif du faisceau d'excitation 2 par rapport à l'échantillon 1 et d'acquisition d'une mesure de spectrométrie jusqu'à obtenir une mesure de spectrométrie pour chaque position de mesure PM de la surface balayée 4 sur l'échantillon 1.

La résolution spatiale de l'image ainsi obtenue dépend de la taille du faisceau d'excitation 2 sur l'échantillon 1 et du pas de déplacement DX, DY choisi.

Le microscope peut être un microscope optique comportant un objectif de microscope 3 pour focaliser un faisceau laser 2 sur un échantillon 1 à analyser. Le microscope optique est combiné à un spectromètre Raman ou, respectivement de fluorescence optique ou de photoluminescence, configuré pour mesurer un spectre de diffusion Raman ou, respectivement un spectre de fluorescence optique ou de photoluminescence dans le domaine UV-visible.

Alternativement, le microscope peut être un microscope de fluorescence de rayons X, comportant un système de focalisation et de balayage de faisceau de rayons X. Le microscope de fluorescence de rayons X est alors combiné à un spectromètre configuré pour mesurer un spectre de rayons X (XRF).

Alternativement, le microscope peut être un microscope électronique à balayage (SEM pour Scanning Electron Microscope), comportant un système de focalisation et de balayage de faisceau électronique. Le microscope électronique à balayage est alors combiné à un spectromètre configuré pour mesurer un spectre de rayons X (EDX), ou respectivement un spectre de cathodo-luminescence.

Ces instruments d'analyse permettent d'acquérir point par point des mesures de spectrométrie d'un échantillon 1 sur une surface balayée 4 avec une résolution spatiale déterminée notamment par la taille du faisceau d'excitation incident sur l'échantillon.

Les techniques d'imagerie de spectrométrie point par point permettent d'obtenir une image résolue spatialement et spectralement d'un échantillon. A titre d'exemple, l'application de la microspectrométrie Raman permet d'analyser la distribution spatiale de composition chimique dans une zone d'un comprimé pharmaceutique, avec une résolution spatiale de l'ordre de $\lambda$, où $\lambda$ représente la longueur d'onde du faisceau d'excitation.

Classiquement, la résolution spatiale d'une image spectrale ou hyperspectrale obtenue en microscopie à balayage est spatialement uniforme sur toute la surface balayée et analysée. La durée d'acquisition d'une image de microspectrométrie à balayage croit en fonction du nombre de points dans l'image de spectrométrie ainsi formée. En pratique, la durée d'acquisition est environ égale au produit du nombre de mesures de spectrométrie par la durée d'acquisition d'une mesure de spectrométrie.

L'instrument d'analyse de l'invention peut comporter en outre avantageusement un autre dispositif d'imagerie permettant d'acquérir une image initiale, de haute résolution spatiale, de la zone de l'échantillon à étudier. Cette image structurelle initiale peut être une image vidéo acquise au moyen d'une caméra CCD combinée au microscope à balayage. Dans un SEM, un détecteur d'électrons secondaires peut fournir rapidement une image initiale de haute résolution spatiale. Or, certains détails structurels détectés sur une image vidéo de haute résolution, tel que par exemple des variations locales de luminosité, peuvent être indicatifs de variations de mesures obtenues par spectrométrie, bien que l'image vidéo ne puisse généralement pas fournir d'information de type spectrométrique.

Procédé

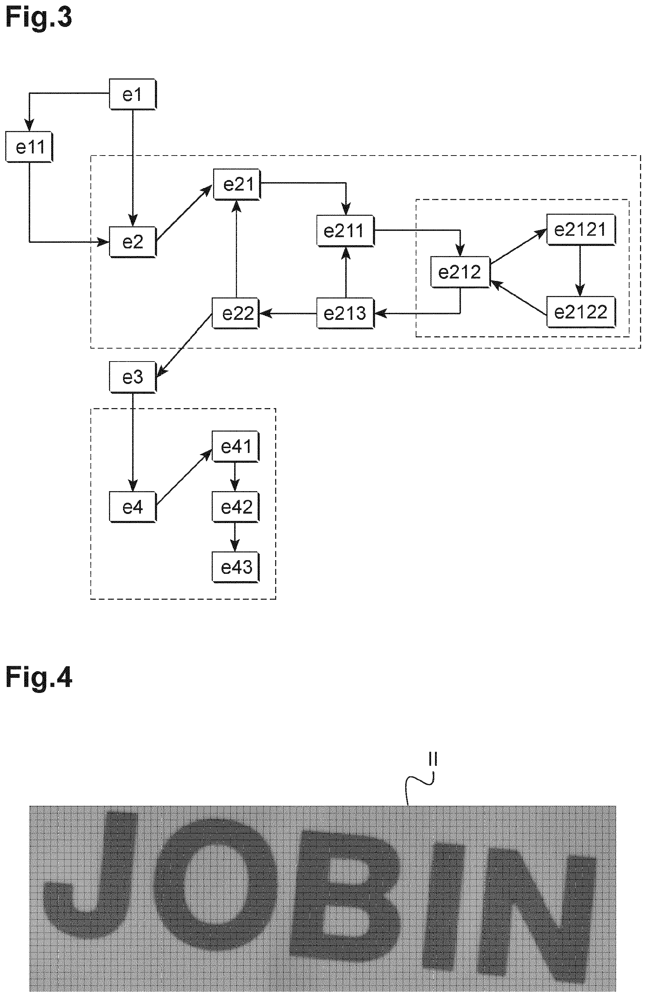

La figure 3 représente un procédé d'acquisition et de formation d'une image de spectrométrie IS de l'échantillon 1.

Etape e1)

Comme le montre la figure 3, le procédé comprend une étape e1 d'acquisition d'une image initiale II d'une zone de l'échantillon 1, l'image initiale II étant composée de pixels, et de définition d'un ensemble maximal de N, $2\leq N$, positions de mesure PM de spectrométrie, chaque position de mesure PM comprenant au moins une coordonnée, représentative de la position de mesure PM par rapport à la zone de l'échantillon, et au moins une intensité, déterminée sur la base d'au moins un pixel de l'image initiale II situé dans un voisinage de la position de mesure PM.

Par acquisition d'image initiale II, on entend ici la détection d'une image de l'échantillon 1 sur un capteur d'image, par exemple de type CCD ou encore la récupération d'un fichier image de l'échantillon 1 obtenu sur un autre instrument de métrologie ou à partir d'une base de données comprenant une image de l'échantillon 1. De préférence, on utilise une image initiale II numérique. Si l'image initiale II détectée ou collectée est analogique, on la numérise, de manière à obtenir une image initiale II numérique de l'échantillon 1. Si nécessaire, l'image initiale II est redimensionnée en fonction de la zone que l'on souhaite analyser par balayage du faisceau d'excitation 2 et/ou par déplacement de l'échantillon 1 par rapport au faisceau d'excitation 2.

En pratique, l'image initiale II peut être acquise selon l'une des modalité d'imagerie suivantes :

- acquisition spectroscopique à une ou plusieurs bandes spectrales prédéterminées ;
- acquisition optique en réflexion ou en transmission ;
- acquisition hyperspectrale ;
- acquisition de microscope à force atomique ;
- acquisition de microscope électronique à balayage.

L'image initiale II peut être acquise grâce au dispositif de spectrométrie de l'instrument d'analyse lui-même, par exemple dans le cas où l'image initiale II est une image spectroscopique à une seule bande spectrale. D'autres modalités requièrent un dispositif d'imagerie supplémentaire.

Par exemple, ici, l'image initiale II est une image vidéo obtenue au moyen d'un capteur CCD et en éclairant l'échantillon en lumière blanche. Les réglages de l'éclairage et du système de détection sont ajustés de manière à augmenter le contraste de l'image et en faire ressortir les détails structurels. Avantageusement, l'intensité, la polarisation et/ou la longueur d'onde d'illumination et/ou de détection sont ajustés de manière à obtenir une image structurelle initiale fortement contrastée.

Un exemple d'une telle image initiale II est représenté en figure 4. Sur la figure 4, l'échantillon 1 symbolise les lettres J, O, B, I et N en sombre sur un fond clair.

Ici, l'image initiale II est une image RGB où l'intensité de chaque pixel comprend trois composantes, une composante pour le rouge, une composantes pour le vert et une composante pour le bleu, toutes codées sur 256 bits.

Quelle que soit la modalité d'acquisition de l'image initiale II, l'image initiale II est composée de pixels possédant une ou plusieurs intensités, ici trois intensités. Ici, les pixels sont classiquement répartis en lignes et en colonnes.

De préférence, la durée d'acquisition de l'image initiale II est courte par rapport à la durée d'acquisition de l'image de spectrométrie IS. L'image initiale II est par exemple acquise en quelques fractions de secondes alors que l'image de spectrométrie IS est acquise en plusieurs minutes.

Lors de l'étape e1, un ensemble maximal de N, $2 \leq N$, positions de mesure PM de spectrométrie est défini. Ici, le nombre maximum de position de mesure PM dépend du pas DX suivant l'axe X et du pas DY suivant l'axe Y. Les pas DX, DY sont choisis en fonction de la résolution de l'instrument d'analyse. Les pas DX, DY peuvent par exemple être déterminés par le diamètre du spot de mesure 6 et par la précision de l'instrument d'analyse dans le déplacement relatif du faisceau d'excitation 2 par rapport à l'échantillon 1.

Ici, les positions de mesure PM définissent donc une grille, de pas DX et DY, dont les dimensions correspondent à la zone de l'échantillon 1 à analyser.

Chaque position de mesure PM est repérée par rapport à l'échantillon 1 par au moins une coordonnée. Ici, une position de mesure est repérée par deux coordonnées, une coordonnée CX suivant l'axe X et une coordonnée CY suivant l'axe Y.

L'image initiale II est de préférence une image haute résolution. En pratique, la résolution de l'image initiale II est au moins aussi élevée que le pas de la grille des positions de mesure PM. Les coordonnées d'une position de mesure PM peuvent alors correspondre à un pixel de l'image initiale II. Dans le cas où la résolution de l'image initiale II est plus élevée que le pas de la grille des positions de mesure PM, les coordonnées d'une position de mesure PM peuvent alors correspondre à plusieurs pixels.

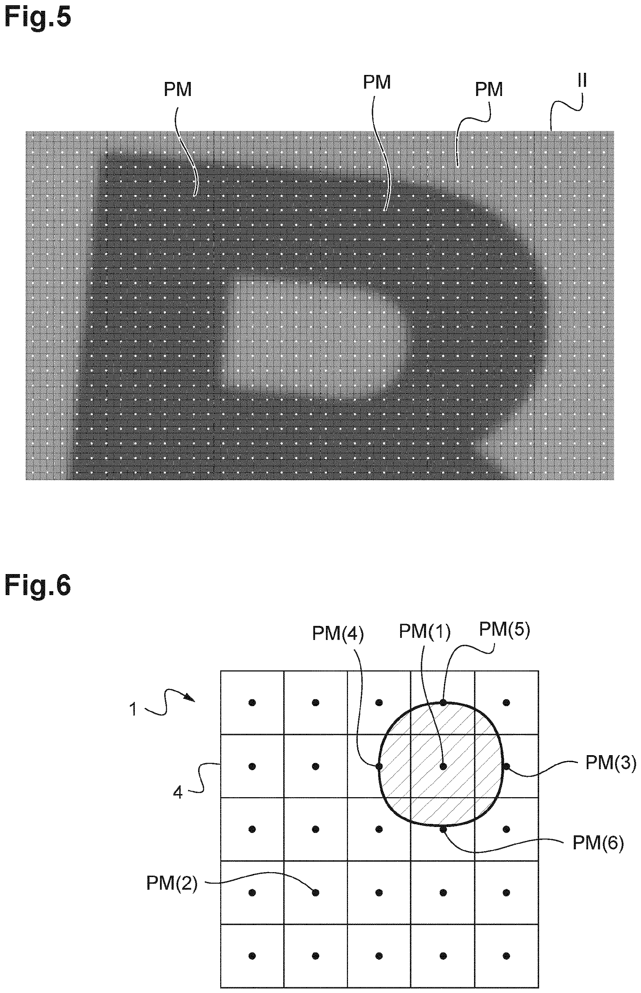

Sur la figure 5, les positions de mesure PM, représentées par des signes « + », sont affichées en superposition de l'image initiale II. Pour ne pas surcharger la figure, seulement une partie des positons de mesures PM sont représentées. En pratique, la grille de positions de mesure PM peut être au moins 4 ou 5 fois plus dense que sur l'exemple de la figure 5.

Par exemple, dans une direction donnée, deux positions de mesure PM peuvent être distantes d'environ 4 pixels. La résolution de l'image initiale II est alors environ 16 fois supérieure à la résolution spatiale maximum de l'image de spectrométrie IS.

Chaque position de mesure PM comprend aussi au moins une intensité I. L'intensité d'une position de mesure PM est calculée sur la base de l'intensité des pixels de l'image initiale II se trouvant dans un voisinage du point de mesure.

Un pixel est par exemple voisin de la position de mesure PM la plus proche de lui. Le nombre de pixels dans le voisinage d'une position de mesure PM peut être estimé par le rapport entre le nombre de pixel de l'image initiale II et le nombre maximum N de positions de mesure PM. Encore en exemple, le voisinage peut dépendre des dimensions du spot de mesure 6. Le voisinage d'une position de mesure PM peut ainsi être défini par l'ensemble des les pixels compris dans un cercle centré sur la position de mesure PM et de dimensions sensiblement semblables au le spot de mesure 6.

Ici, l'intensité d'une position de mesure PM est calculée en réalisant une interpolation, par exemple une moyenne ou une interpolation bicubique, des intensités des pixels PI situés dans son voisinage V. En d'autres termes, l'image initiale II est sous-échantillonnée pour que le nombre de pixels après sous-échantillonnage soit égal au nombre maximum N de positions de mesure PM. Une fois le sous-échantillonnage effectué, l'intensité d'une position de mesure PM correspond alors de façon bijective à l'intensité d'un pixel de l'image initiale.

L'intensité d'une position de mesure PM est donc de même nature que l'intensité d'un pixel de l'image initiale II. L'intensité d'une position de mesure PM peut alors posséder le même nombre de composantes que l'intensité d'un pixel. Ici, par exemple, l'intensité d'une position de mesure PM comprend trois composantes, une composante rouge IR, une composante verte IG et une composante bleue IB.

Dans un mode de réalisation, l'intensité d'une position de mesure PM possède des composantes supplémentaires telles qu'une composante représentative de l'intensité moyenne des pixels du voisinage, une composante représentative de l'intensité maximum des pixels du voisinage ou encore une composante représentative de l'intensité minimum des pixels du voisinage. Ici, de telles composantes supplémentaires peuvent être définies pour chaque couleur : rouge, verte et bleue.

Etapes e2)

Une fois que la ou les coordonnées et l'intensité de chaque position de mesure PM sont déterminées, le procédé permet d'attribuer à chaque position de mesure PM une valeur de classement.

Pour cela, comme le montre la figure 3, le procédé comprend une étape e2 d'attribution d'une valeur de classement à chacune des N positions de mesure PM sur la base d'écarts entre les positions de mesure PM, un écart entre deux positions de mesure PM étant calculé sur la base d'une différence d'intensité et d'une différence de coordonnées.

L'étape e2 permet d'ordonner ou de classer toutes les positions de mesure PM de la plus contributive à la moins contributive (ou inversement) grâce aux valeurs de classement. Comme expliqué en introduction, la valeur de classement d'une position de mesure PM permet de quantifier la contribution de la position de mesure PM dans la formation de l'image de spectrométrie IS.

La contribution d'une position de mesure PM représente l'importance ou l'intérêt d'acquérir une mesure de spectrométrie à cette position de mesure pour améliorer la qualité de l'image de spectrométrie IS. Les mesures de spectrométrie sont ensuite acquises sur la base des valeurs de classement, en commençant généralement par les positons de mesure les plus contributives. L'image de spectrométrie est reconstruite et actualisée en temps réel sur la base des mesures de spectrométrie acquises effectivement.

Par exemple, à un instant donné où j, $1 \leq j \leq N$, mesures de spectrométrie ont été acquises, la $j+1^{ème}$ position de mesure PM la plus contributive est celle à laquelle l'acquisition de la $j+1^{ème}$ mesure de spectrométrie augmentera le plus la qualité de l'image de spectrométrie IS. Comme décrit ultérieurement, la qualité de l'image de spectrométrie IS à $j+1$ mesures de spectrométrie peut être estimée sur la base de l'image initiale II. La qualité de l'image de spectrométrie IS à $j$ mesures peut correspondre à une différence avec l'image de spectrométrie IS à N mesures de spectrométrie, c'est-à-dire avec l'image de spectrométrie IS qui serait acquise pour un facteur d'accélération de 1.

Ce classement s'effectue sur la base de la ou les coordonnées et l'intensité de la position de mesure PM. Le classement s'effectue donc sur la base de l'image initiale II.

L'écart entre deux positions de mesure est calculé sur la base d'une différence d'intensité et d'une différence de coordonnées. L'écart est donc représentatif de la similitude, à la fois spatiale et en intensité, entre deux positions de mesure PM. Plus l'écart est faible, plus les positions de mesure PM sont similaires.

En pratique, si l'écart entre deux positions de mesure PM est faible, acquérir une mesure de spectrométrie uniquement à l'une des deux positions de mesure PM est suffisant pour construire une image de spectrométrie. La mesure de spectrométrie manquante peut être estimée sur la base de la mesure de spectrométrie acquise. Une des deux positions de mesure PM peut alors être considérée comme peu contributive puisqu'il n'est pas prioritaire d'y acquérir une mesure de spectrométrie.

Pour calculer un écart entre deux positons de mesure PM, le calculateur effectue ici une somme pondérée du carré de la différence d'intensité entre les deux positions de mesure et du carré de la différence de coordonnée entre les deux positions de mesure.

Par exemple, ici, avec une première position de mesure PM localisée aux coordonnées CX1, CY1 et dont les composantes d'intensité sont IR1, IG1, IB1 et avec une deuxième position de mesure PM localisée aux coordonnées CX2, CY2 et dont les composantes d'intensité sont IR2, IG2, IB2, l'écart E peut être donné par le formule :

$$E = (IR1-IR2)^2+(IG1-IG2)^2+(IB1-IB2)^2+R*((CX1-CX2)^2+(CY1-CY2)^2).$$

Ici, les composantes d'intensité IR1, IG1, IB1, IR2, IG2, IB2 sont des valeurs codées sur 8 bits comprises entre 0 et 255. Les coordonnées CX1, CY1, CX2, CY2 sont les valeurs des indices définissant la localisation de la position de mesure sur la grille comme représenté en figure 2. Les coordonnées CX1, CY1, CX2, CY2 sont ici des nombres entiers, par exemple compris entre 1 et racine carrée de N pour une grille carrée.

En variante, un écart peut être calculé comme une somme pondérée de la différence d'intensité entre les deux positions de mesure et du carré de la différence de coordonnée entre les deux positions de mesure. Encore en variante, un écart peut être calculé comme une somme pondérée de la moyenne des intensités des deux positions de mesure et de la moyenne des coordonnées entre les deux positions de mesure.

Ici, le coefficient de pondération R permet de pondérer la différence de coordonnées par rapport à la différence d'intensité. Le coefficient de pondération R peut être ajusté manuellement par un utilisateur ou automatiquement sur la base des variations de contraste présentes sur l'image initiale II. En pratique, le coefficient de pondération R peut prendre une valeur comprise entre 30 et 100 pour une image initiale comprenant des différences d'intensité entre pixels de zones claires et pixels de zones sombres supérieures à 100.

Le coefficient de pondération R utilisé pour le calcul des écarts reste constant lors de l'étape e2, c'est-à-dire pour le classement de toutes les positions de mesure PM.

Avantageusement, le coefficient de pondération R permet d'adapter le calcul des écarts à l'échantillon 1. Par exemple, plus l'image initiale II présente des fréquences spatiales élevées, plus le coefficient de pondération R est faible. La similitude entre deux positions de mesure PM est alors principalement basée sur l'intensité. Encore en exemple, si l'image initiale II présente de faibles variations de contraste sur des portions relativement grande de l'image initiale II, le coefficient de pondération peut être élevé. La similitude entre deux positions de mesure PM est alors principalement basée sur les coordonnées.

La valeur du coefficient de pondération R peut aussi être proportionnelle à un contraste global de l'image initiale II pour conserver un équilibre entre la différence de coordonnées et la différence d'intensité. Cela permet par exemple de d'attribuer une pondération significative à la différence de coordonnées même dans le cas de différences d'intensité très fortes.

Dans le mode de réalisation où l'intensité d'une position de mesure possède les composantes supplémentaires, le calcul de l'écart prend en compte ces composantes supplémentaires.

De façon avantageuse, lors de l'étape e2, le calculateur construit une liste S comprenant les positions de mesure PM dont la valeur de classement reste à attribuer, c'est-à-dire les positions de mesure qu'il reste à ordonner. Le calculateur construit aussi une liste U comprenant les positions de mesure PM dont la valeur de classement est attribuée, c'est-à-dire les positions de mesure PM déjà ordonnées.

Par exemple, après la définition des N positions de mesure PM, toutes les positions de mesure PM restent à ordonner. La liste S contient alors N positions de mesure PM et la liste U aucune position de mesure PM. Encore en exemple, si le calculateur a attribué une valeur de classement à j positions de mesure, la liste S contient N-j positions de mesure PM et la liste U contient j positions de mesure PM.

Dans un premier mode de réalisation, représenté en figure 3, pour attribuer une valeur de classement à chaque position de mesure PM de la liste S, le calculateur itère les étapes e21 et 22 :

e21) pour chaque position de mesure PM de la liste S, détermination d'une erreur totale ;

e22) sélection d'une position de mesure PM de la liste S sur la base de chaque erreur totale déterminée à l'étape e21), attribution d'une valeur de classement à la position de mesure PM sélectionnée et déplacement de la position de mesure PM sélectionnée de la liste S à la liste U.

A la fin de l'étape e21, chaque position de mesure PM de la liste S est associée à une erreur totale.

Par exemple, si les étapes e21 et e22 ont déjà été effectuées j-1 fois, ce qui signifie que le calculateur a attribué une valeur de classement à j-1 positions de mesure PM, à l'itération j de l'étape e21, le calculateur détermine j erreurs totales. La détermination de l'erreur totale sera décrite ultérieurement. Ensuite, à l'itération j de l'étape e22, le calculateur sélectionne une position de mesure PM, parmi les j positions de mesure PM de la liste S, en fonction des erreurs totales, et attribue une valeur de classement à la position de mesure PM sélectionnée.

Plus spécifiquement, lors d'une itération de l'étape e22, le calculateur sélectionne la position de mesure PM associée à l'erreur totale la plus faible.

Comme décrit ci-dessous, l'erreur totale représente ici la contribution de toutes les positions de mesure PM déjà classées, c'est-à-dire celles qui ont reçu une valeur de classement. Lors d'une itération de l'étape e22, la contribution d'une position de mesure PM sélectionnée peut par exemple être estimée par la différence entre une erreur totale avant classement, c'est-à-dire avant de déplacer cette position de mesure dans la liste U, et une erreur totale après classement, c'est-à-dire après avoir déplacé cette position de mesure dans la liste U.

Ici, avant l'itération des étapes e21 et e22, une valeur de classement est initialisée à une valeur prédéterminée et à chaque itération de l'étape e22, une valeur de classement strictement inférieure, respectivement supérieure, à la valeur de classement la plus faible, respectivement la plus élevée, est attribuée à la position de mesure PM associée à l'erreur totale la plus faible. Deux exemples d'attribution de valeurs de classement sont détaillés ci-dessous.

Le calculateur attribue ensuite une valeur de classement à la position de mesure sélectionnée. Le calculateur attribue par exemple uniquement des valeurs de classement strictement supérieures aux précédentes ou uniquement des valeurs de classement strictement inférieures aux précédentes. Les valeurs de classement précédentes sont les valeurs de classement déjà attribuées aux itérations précédentes ou égales à une valeur d'initialisation prédéterminée.

Si le calculateur attribue des valeurs de classement strictement supérieures aux précédentes, les positions de mesure PM sont ordonnées, à la fin de l'étape e2, de la moins contributive à la plus contributive en fonction des valeurs de classement croissantes.

En pratique, pour faire cela, une valeur de classement peut être initialisée à zéro. Ensuite, chaque position de mesure PM sélectionnée se voit attribuer une valeur de classement incrémentée de +1 par rapport à la précédente. Ainsi, la position de mesure PM la moins contributive possède une valeur de classement de 1 et la plus contributive une valeur de classement de N.

Si le calculateur attribue des valeurs de classement strictement inférieures aux précédentes, les positions de mesure PM sont ordonnées, à la fin de l'étape e2, de la plus contributive à la moins contributive en fonction des valeurs de classement croissantes.

En pratique, pour faire cela, une valeur de classement peut être initialisée à N+1. Ensuite, chaque position de mesure PM sélectionnée se voit attribuer une valeur de classement incrémenté de -1 par rapport à la précédente. Ainsi, la position de mesure PM la moins contributive possède une valeur de classement de N et la plus contributive une valeur de classement de 1.

Une fois que le calculateur a attribué une valeur de classement à une position de mesure PM sélectionnée, cette position de mesure PM sélectionnée est déplacée de la liste S à la liste U. Après j itérations des étapes e21 et e22, la liste S contient N-j positions de mesure PM et la liste U contient j positions de mesure PM.

Pour attribuer une valeur de classement à chaque position de mesures PM de la liste S, le calculateur itère les étapes e21 et 22 jusqu'à ce qu'il n'y ait plus de positions de mesure PM dans la liste S. Ici, cela correspond à N itérations des étapes e21 et e22.

Dans ce premier mode de réalisation, à l'étape e21, la détermination d'une erreur totale associée à une position de mesure PM considérée de la liste S se fait en itérant les étapes e211, e212 et e213 :

e211) déplacement d'une position de mesure PM considérée de la liste S à la liste U ;
e212) calcul de l'erreur totale associée à la position de mesure PM considérée sur la base d'écarts entre des positions de mesure PM de la liste S et des positions de mesure PM de la liste U ;
e213) déplacement de la position de mesure PM considérée de la liste U à la liste S.

Ici, à l'étape e221, l'erreur totale associée à la position de mesure PM considérée est calculée sur la base des écarts entre chaque position de mesure PM de la liste U et chaque position de mesure PM de la liste U ou entre chaque position de mesure PM de la liste U et des positions de mesure PM de la liste S.

Comme le montre la figure 3, l'étape e212 de détermination de l'erreur totale associée à la position de mesure considérée comprend les sous-étapes e2121 et 2122 :

e2121) pour chaque position de mesure PM de la liste U, détermination de la position de mesure de la liste S avec laquelle l'écart est minimum, la valeur de l'écart entre ces deux positions de mesure définissant un écart minimum ;
e2122) calcul de l'erreur totale sur la base de chaque écart minimum déterminé à l'étape e2121).

A l'étape e2121, pour chaque position de mesure PM de la liste U, le calculateur détermine la position de mesure de la liste S avec laquelle l'écart est minimum. Le calcul d'un écart est détaillé ultérieurement. La valeur de cet écart minimum est sauvegardée.

Par exemple, lors de l'itération j de l'étape e21, après déplacement de la position de mesure PM considérée de la liste S à la liste U à l'étape e212, la liste S contient N-j positions de mesure PM et la liste U contient j positions de mesure PM. Le calculateur peut alors calculer (N-j)xj écarts entre les positions de mesure PM de la liste S et les positions de mesure PM de la liste U.

De façon remarquable, pour réduire le nombre de calculs et donc le temps de calcul, il est possible de calculer uniquement certains écarts pour déterminer l'écart minimum d'une position de mesure PM de la liste U. Par exemple, ici, les premiers écarts calculés sont ceux entre la position de mesure PM de la liste U et les positions de mesure PM de la liste S situées les plus près spatialement, c'est-à-dire celles avec lesquelles la différence de coordonnées, appelée par la suite distance, est la plus faible. Les écarts sont ensuite calculés par ordre croissant de différence de coordonnées. En fonction des écarts déjà calculés, il est possible d'arrêter les calculs si la contribution de la différence de cordonnées est supérieure au plus faible écart déjà calculé. L'écart minimum fait alors nécessairement partie des écarts déjà calculés.

Ici, l'erreur totale est égale à la somme de chaque écart minimum déterminé à l'étape e2121. Par exemple, lors de l'itération j de l'étape e21, après avoir calculé (N-j)xj écarts et déterminé j écarts minimums , le calculateur calcule l'erreur totale associée à une position de mesure PM en effectuant la somme des j écarts minimums pour cette position de mesure PM.

Une fois que l'erreur totale associée à la position de mesure PM considérée est déterminée, le calculateur déplace, à l'étape e213, la position de mesure PM considérée de la liste U à la liste S.

En itérant les étapes e211, e212 et 213, le calculateur associe donc une erreur totale à chaque position de mesure PM de la liste S. Comme décrit précédemment, cela permet ensuite d'attribuer une valeur de classement à la position de mesure PM associée à l'erreur totale la plus faible. Par exemple, lors de l'itération j de l'étape e21, cela permet d'attribuer une valeur de classement à la position de mesure PM associée à l'erreur totale la plus faible parmi les j positions de mesure de la liste S.

Dans un second mode de réalisation (non-représenté), à l'étape e21, le calculateur détermine un changement d'erreur totale associée à chaque position de mesure PM. Le changement d'erreur totale est ici une différence entre deux erreurs totales, pour deux positions de mesure PM, par exemple calculées conformément aux étapes e2121 et e2122. Le changement d'erreur totale peut aussi être une différence entre une première erreur totale, appelée erreur totale initiale, calculée avant que la position de mesure PM considérée soit déplacée de la liste S la liste U, et une deuxième erreur totale calculée après que la position de mesure PM considérée soit déplacée de la liste S la liste U.

Lors d'une itération donnée de l'étape e21, la position de mesure de la liste S qui est considérée la moins contributive est celle qui est associée au changement d'erreur totale le plus faible. Cela signifie qu'à l'étape e22, la position de mesure sélectionnée est celle qui est associée au changement d'erreur totale le plus faible.

Calculer des changements d'erreur totale, plutôt que des erreurs totales, permet d'étudier une variation d'erreur totale d'une position de mesure PM considérée à une autre position de mesure PM considérée, plutôt que de calculer une erreur totale pour chaque position de mesure considéré.

En effet, par exemple, il n'est pas nécessaire de calculer complètement l'erreur totale associée à une position de mesure PM considérée. Pour cela, il est prévu de calculer une erreur locale, sur la base uniquement des écarts dans un voisinage de la position de mesure PM considérée. Ce voisinage est par exemple défini pour chaque position de mesure PM considérée sur la base de l'écart minimum. Les positions de mesure PM qui se situent nécessairement spatialement trop loin, du fait de la différence de coordonnées, pour correspondre à l'écart minimum sont exclus du voisinage. Ce voisinage peut aussi être défini par une valeur seuil prédéterminée sur la différence de coordonnées.

L'erreur locale permet d'estimer le changement d'erreur totale puisque la position de mesure considérée n'a d'influence que dans son voisinage.

De plus, à chaque nouvelle itération de l'étape e21, il est possible de d'estimer la nouvelle erreur totale initiale sans avoir à calculer d'écarts. Pour cela, on peut retrancher à l'erreur initiale de l'itération précédente le changement d'erreur totale associé à la position de mesure sélectionnée à l'itération précédemment. Cela permet de ne pas recalculer l'erreur totale initiale et de réduire ainsi le nombre de calculs.

La figure 6 représente un exemple de classement de positions de mesure PM sur la base d'une image initiale simulée. Cette image initiale simulée présente un cercle sombre sur un fond clair c'est-à-dire deux zones avec deux intensités distinctes. La grille sur laquelle sont placée les N positions de mesure PM a intentionnellement un pas élevé pour faciliter la compréhension.

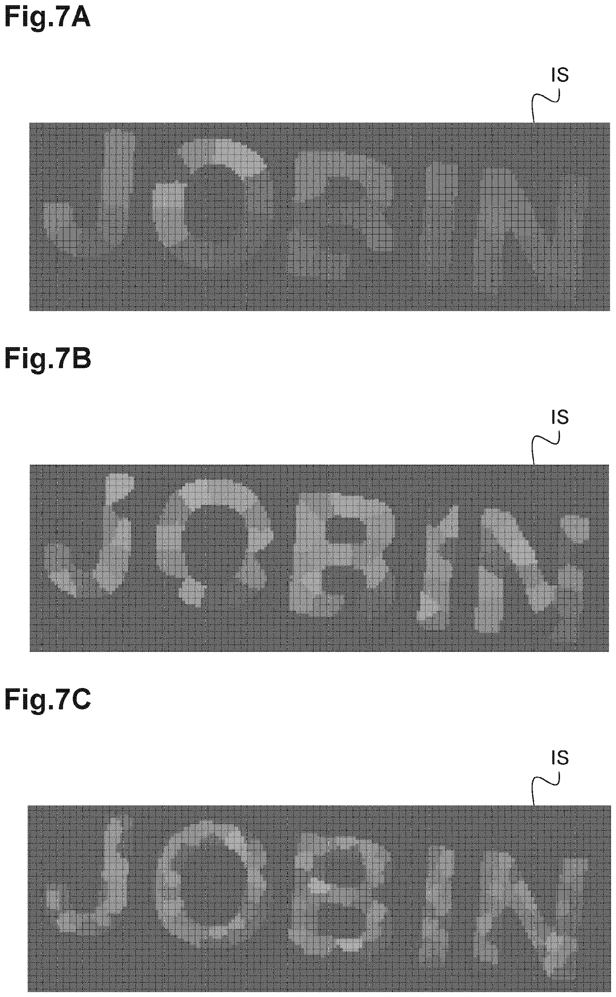

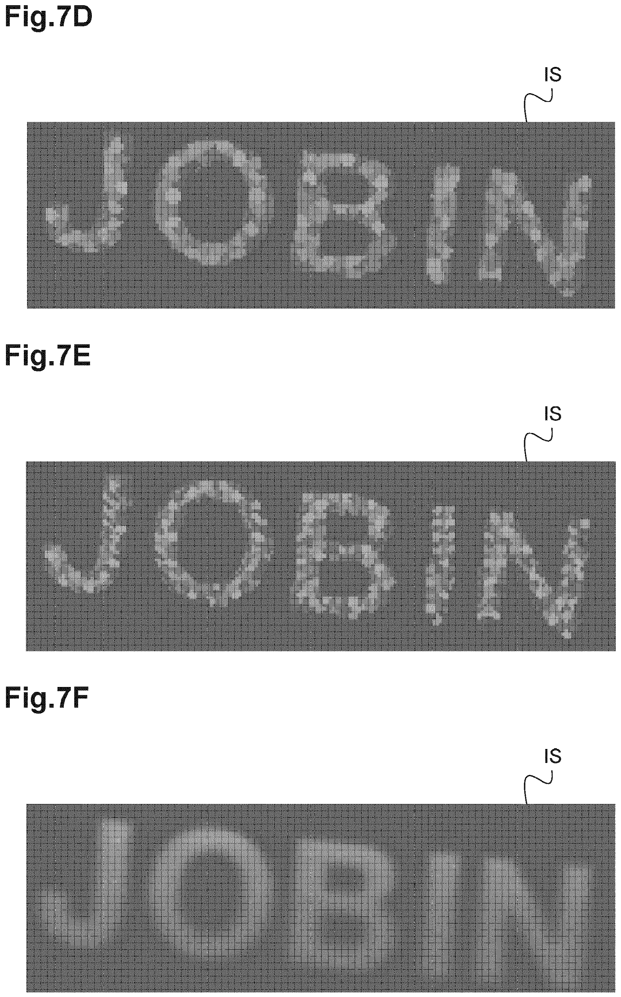

Sur la figure 7, les six positions de mesure PM les plus contributives sont représentées par ordre croissant de valeur de classement. Deux positions de mesure PM(1), PM(2) peuvent permettre d'estimer respectivement la zone claire et la zone sombre représentée par des hachures. Les positions de mesure PM(3), PM(4), PM(5), PM(6) sont les plus contributives suivantes car ces positions de mesure PM(3), PM(4), PM(5), PM(6) permettent d'améliorer la résolution au niveau de la bordure de la zone sombre.

Une fois toutes les positions de mesure ordonnées, il est possible d'estimer l'image de spectrométrie IS acquise avec un nombre de mesure de spectrométrie déterminé inférieur au nombre N maximum. Cela est présenté ultérieurement après avoir décrit l'étape de construction de l'image de spectrométrie S.

Etape e3

Une fois toutes les positions de mesure PM ordonnées, par exemple de la plus contributive à la moins contributive, le calculateur peut définir un groupe de positions de mesure PM parmi les plus contributives.

Ainsi, à l'étape e3, le calculateur détermine un groupe de P, $1 \leq P \leq N$, positions de mesure PM parmi l'ensemble des N positions de mesure PM en fonction des valeurs de classement attribuées à l'étape e2.

Pour déterminer le groupe de P positions de mesure PM, le calculateur sélectionne les P positions de mesure les plus contributives grâce aux valeurs de classement attribuées aux positions de mesure PM à l'étape e2.

En d'autres termes, à l'étape e3, les P positions de mesure PM du groupe sont déterminées en fonction d'un ordre croissant, respectivement décroissant, des valeurs de classement.

Par exemple, dans le cas où à l'étape e2, le calculateur incrémente de +1 les valeurs de classement de la position de mesure PM la moins contributive à la plus contributive, les P positions de mesure du groupe sont celles auxquelles les P valeurs de classement les plus élevées sont attribuées. Dans ce cas, les P positions de mesure PM du groupe sont déterminées en fonction d'un ordre décroissant des valeurs de classement, de la plus élevée à la plus faible.

Encore en exemple, dans le cas où à l'étape e2, le calculateur incrémente de -1 les valeurs de classement de la position de mesure PM la moins contributive à la plus contributive, les P positions de mesure du groupe sont celles auxquelles les P valeurs de classement les plus faibles sont attribuées. Dans ce cas, les P positions de mesure PM du groupe sont déterminées en fonction d'un ordre croissant des valeurs de classement, de la plus faible à la plus élevée.

Le nombre P de positions de mesure PM peut par exemple être déterminé de façon à atteindre un facteur d'accélération donné. Par exemple, pour atteindre un facteur d'accélération de 10, le nombre P de positions de mesure PM du groupe est égal à N/10. Cela représente à l'étape e4, des acquisitions de mesures de spectrométrie à seulement 10% des positions de mesure PM.

Le nombre P de positions de mesure PM peut par exemple être prédéterminé par un utilisateur.

Le nombre P de positions de mesure PM peut par exemple être déterminé de façon à atteindre une durée d'acquisition donnée ou une distance parcourue par le faisceau d'excitation 2 par rapport à l'échantillon 1 donnée lors de l'étape e4. Dans ces cas, le nombre P de positions de mesure PM dans le groupe dépend de la localisation des positions de mesure PM par rapport à l'échantillon 1.

Le nombre P de positions de mesure PM peut aussi être déterminé en définissant une valeur seuil sur les erreurs totales. Après classement à l'étape e2), l'erreur totale associée à chaque position de mesure PM peut être gardée en mémoire. Le nombre P peut alors être déterminée de sorte que la somme des erreurs totales associées aux position de mesure qui ne sont pas sélectionnée dans le groupe soit inférieure à la valeur seuil.

Un critère supplémentaire peut être utilisé lors de la détermination du nombre P de positions de mesure PM. Le nombre P de positions de mesure PM peut être déterminé de sorte que la plus grande distance entre deux positions de mesure PM soit inférieure à une valeur seuil. La valeur seuil peut par exemple être égale à 15 fois le pas DY ou DY.

EP 4 111 147 B1

Etape e4

Une fois le groupe contenant les P positions de mesure PM les plus contributives déterminé, des mesures de spectrométrie peuvent être acquises aux P positions de mesure PM du groupe.

Ainsi, l'étape e4, successivement, pour chaque position de mesure du groupe déterminée à l'étape e3, le faisceau d'excitation 2 est positionné en la position de mesure PM sur la zone de l'échantillon 1, une mesure de spectrométrie est acquise et l'image de spectrométrie IS est construite sur la base de la ou des mesures de spectrométrie acquises.

Ici, l'image de spectrométrie IS est mise à jour après chaque nouvelle acquisition d'une mesure de spectrométrie. L'image de spectrométrie IS est donc construite progressivement et de façon dynamique au cours de l'étape e4, c'est-à-dire en parallèle des acquisitions des mesures de spectrométrie. Cela permet d'améliorer de façon continue la qualité de l'image spectrométrie IS lors de l'acquisition de chaque nouvelle mesure de spectrométrie.

L'ordre d'acquisition des mesures de spectrométrie peut par exemple se faire en fonction des valeurs de classement attribuées aux P positions de mesure PM du groupe, par exemple de façon à acquérir des mesures de spectrométrie de la position de mesure PM la plus contributive à la moins contributive.

Selon une variante particulière et avantageuse, lorsque le groupe comprend au moins 3 positions de mesure PM, une trajectoire pour effectuer les positionnements successifs du faisceau d'excitation peut être prédéterminée. Cela signifie que l'ordre d'acquisition des mesures de spectrométrie, aux P positions de mesure PM du groupe, peut se faire selon une trajectoire prédéterminée du faisceau d'excitation 2 par rapport à l'échantillon 1.

Cette trajectoire peut notamment être déterminée de manière à optimiser le déplacement du faisceau d'excitation 2 par rapport à l'échantillon 1. Cette optimisation peut par exemple consister à minimiser la distance parcourue par le faisceau d'excitation 2 par rapport à l'échantillon 1 lors de son positionnement successif en toutes les positions de mesure PM du groupe. Cette optimisation peut aussi par exemple consister à minimiser le nombre de changements de direction d'une platine de déplacement du porte-échantillon. Cette optimisation peut aussi consister à minimiser le temps nécessaire pour positionner successivement le faisceau d'excitation 2 en toutes les P positions de mesure PM du groupe.

L'étape e4 comprend la construction de l'image de spectrométrie IS. La résolution spatiale maximale de l'image de spectrométrie IS dépend notamment de l'ensemble maximum N de position de mesure PM. Ici, la résolution spatiale dépend par exemple des pas de déplacement DX, DY choisis. La résolution spatiale de l'image de spectrométrie IS dépend aussi des mesures de spectrométrie qui ont été acquises.

De façon générale, avec le procédé d'acquisition et de formation de l'image de spectrométrie IS, la résolution spatiale n'est pas homogène sur toute l'image de spectrométrie IS. En effet, puisque les zones de l'échantillon 1 présentant de fortes variations spatiales d'intensité correspondent aux positions de mesure PM les plus contributives, plus de mesures de spectrométrie sont acquises dans ces zones, l'image de spectrométrie IS présente alors une résolution spatiale supérieure dans ces zones.

La résolution spatiale de l'image de spectrométrie augmente donc localement à chaque acquisition d'une mesure de spectrométrie en une position de mesure PM.

Ici, l'image de spectrométrie IS est composée de pixels de spectrométrie. L'image de spectrométrie IS est ici composée d'autant de pixels de spectrométrie que de positions de mesure dans l'ensemble maximal N.

Ici, puisque les positions de mesure PM sont disposées sur une grille, c'est-à-dire en ligne et en colonnes, comme le montrent les figures 5 ou 6, l'image de spectrométrie IS est composée de pixels de spectrométrie aussi disposés en ligne en colonne. Chaque pixel de spectrométrie comprend ici une valeur de spectrométrie représentative de la mesure de spectrométrie. Une valeur de spectrométrie peut par exemple représenter un spectre, une portion de spectre, l'intensité d'une bande spectrale étroite, encore l'intensité d'une longueur d'onde unique ou une information issue d'une analyse multivariée ou d'une analyse spécifique.

Comme le montre la figure 3, dans un mode de réalisation préféré, la construction de l'image de spectrométrie IS comprend les sous-étapes e41 et e42 :

e41) pour chaque position de mesure PM pour laquelle une mesure de spectrométrie a été acquise, détermination d'une valeur de spectrométrie sur la base de la mesure de spectrométrie ;
e42) pour chaque position de mesure restante, détermination d'une valeur de spectrométrie sur la base d'au moins une mesure de spectrométrie sélectionnée, qui est sélectionnée en fonction de la différence de coordonnées entre la position de mesure restante et la position de mesure à laquelle ladite au moins une mesure de spectrométrie sélectionnée a été acquise.

Les positions de mesure PM restantes sont les positions de mesure PM pour lesquelles aucune mesure de spectrométrie n'a été acquise. Ici, les positions de mesure restantes sont donc les positions de mesure PM qui ne sont pas prise en compte lors de l'étape e41.

Aux étapes e41 et e42, l'image de spectrométrie IS est construite en déterminant pour chaque position de

13

mesure PM, c'est-à-dire pour chaque pixel de spectrométrie, une valeur de spectrométrie.

A l'étape e41, le calculateur détermine la valeur de spectrométrie de chaque position de mesure PM à laquelle une mesure de spectrométrie a été acquise, appelée position de mesure acquise, sur la base de cette mesure de spectrométrie. La valeur de spectrométrie d'une position de mesure acquise peut par exemple être égale à la mesure de spectrométrie ou égale à un facteur près, c'est-à-dire égale à la mesure de spectrométrie à une longueur d'onde ou dans une bande étroite de longueur d'onde.

Si k, 1≤k≤N, mesures de spectrométrie ont été acquises, les k valeurs de spectrométrie des k positions de mesure acquises sont déterminées sur la base de leur mesure de spectrométrie respective.

A l'étape e42, le calculateur détermine la valeur de spectrométrie de chaque position de mesure restante, c'est-à-dire les positions de mesure PM qui ne sont pas des positions de mesure acquises. Par la suite, on appelle position de mesure restante « considérée » celle dont on détermine à un instant donné la valeur de spectrométrie.

Pour déterminer la valeur de spectrométrie de la position de mesure restante considérée, le calculateur se base sur au moins une mesure de spectrométrie acquise à une position de mesure acquise. La ou les positions de mesure acquises sont sélectionnées en fonction de leur différence de coordonnées avec la position de mesure restante considérée. La différence de coordonnées entre deux positions de mesure PM est appelée distance.

Ici, à l'étape e42, les mesures de spectrométries sélectionnées sont les mesures de spectrométrie acquises à des positions de mesure acquises possédant une distance avec la position de mesure restante considérée inférieure à une valeur seuil de distance minimum. Cela signifie que toutes les positions de mesure acquise dont la distance avec la position de mesure restante considérée est inférieure à la valeur seuil de distance minimum sont sélectionnées. La valeur de spectrométrie peut alors par exemple être déterminée sur la base d'une moyenne de toutes les mesures de spectrométrie sélectionnées.

De plus, quelles que soient la ou les mesures de spectrométrie sélectionnées, la valeur de spectrométrie est ici déterminée sur la base de chaque mesure de spectrométrie sélectionnée pondérée par l'écart entre la position de mesure acquise à laquelle la mesure de spectrométrie sélectionnée a été acquise et la position de mesure restante considérée.

Ici, le calcul de l'écart entre deux positions de mesure PM est identique à celui décrit précédemment, c'est-à-dire une somme pondérée du carré de la différence d'intensité entre les deux positions de mesure et du carré de la différence de coordonnée entre les deux positions de mesure. Ici, le coefficient de pondération R est identique à l'étape e2 et à l'étape e4. En variante, on peut prévoir que le coefficient de pondération R soit différent à l'étapes e2 et à l'étape e4.

Ici, la pondération est inversement proportionnelle à l'écart. Plus la position de mesure acquise est loin de la position de mesure restante considérée, c'est-à-dire plus l'écart est grand, plus le poids de sa mesure de spectrométrie est faible.

En exemple, la valeur de spectrométrie est déterminée sur la base de deux mesures de spectrométrie et une première position de mesure acquise possède un écart deux fois plus grand que la deuxième avec la position de mesure restante considérée. Alors, lors de la détermination de la valeur de spectrométrie, la mesure de spectrométrie acquise à la deuxième position de mesure acquise peut avoir une pondération deux fois supérieure à celle de la mesure de spectrométrie acquise à la première position de mesure acquise.

En d'autres termes, la valeur de spectrométrie d'une position de mesure restante est déterminée sur la base d'une ou des mesures de spectrométrie acquises à une ou des positions de mesure acquises proches, la proximité entre les positions de mesures PM étant quantifiée par les écarts entre ces positions de mesure PM.

Dans certains cas, il est prévu de n'attribuer aucune valeur de spectrométrie à certaines positions de mesure restantes. L'image de spectrométrie est alors être lacunaire. Ne pas attribuer de valeur de spectrométrie à une position de mesure restante peut par exemple être basé sur une valeur seuil de distance minimum. Si aucune position de mesure acquise ne possède une distance avec la position de mesure restante inférieure à la valeur seuil de distance minimum, aucune valeur de spectrométrie n'est attribuée à la position de mesure restante. Cela signifie que si aucune position de mesure acquise n'est assez proche, spatialement, de la position de mesure restante, aucune valeur de spectrométrie n'est attribuée à la position de mesure restante.

Les figures 7A, 7B, 7C, 7B, 7E et 7F montrent l'image de spectrométrie IS de l'échantillon 1 de la figure 4 à plusieurs facteurs d'accélération. Sur ces figures, les valeurs de spectrométrie des positions de mesure restantes sont égales à la mesure de spectrométrie de la position de mesure acquise la plus proche.

Sur la figure 7A, le facteur d'accélération est de 100, sur la figure 7B, le facteur d'accélération est de 50, sur la figure 7C, le facteur d'accélération est de 20, sur la figure 7D, le facteur d'accélération est de 10, sur la figure 7E, le facteur d'accélération est de 5 et sur la figure 7F, le facteur d'accélération est de 1. On remarque que la qualité de l'image de spectrométrie n'augmente pas de façon régulière.

En effet, en figure 7A, l'image de spectrométrie IS construite sur 1% des positions de mesure PM, les plus contributives, permet déjà de distinguer les contrastes de l'échantillon 1. La qualité de l'image de spectrométrie IS augmente sensiblement si elle est construite sur 2% ou respectivement 5% des positions de mesure PM comme en figure 7B et respectivement 7C. Ensuite, acquérir des mesures de spectrométrie en 10%, comme en figure 7D, respectivement 20%, comme en figure 7E, ou en toutes les positions de mesure comme en figure 7F n'augmente pas significativement la qualité l'image de spectrométrie IS puisque des mesures de spectrométrie ont déjà été acquises aux positions de mesure PM les plus contributives. Même avec un facteur d'accélération élevé, il est possible de distinguer ici le mot JOBIN.

Comme évoqué précédemment, une fois toutes les positions de mesure PM ordonnées, il est possible d'estimer l'image de spectrométrie IS pouvant être acquise avec un nombre donné de mesures de spectrométrie. Il est en effet possible de calculer des écarts entre les pixels de l'image initiale II de la même façon qu'entre des positions de mesure PM. Il est donc possible de construire une image structurelle estimée IE sur la base uniquement de certains pixels, appelé pixels sources PS, correspondant aux positions de mesure les plus contributives.

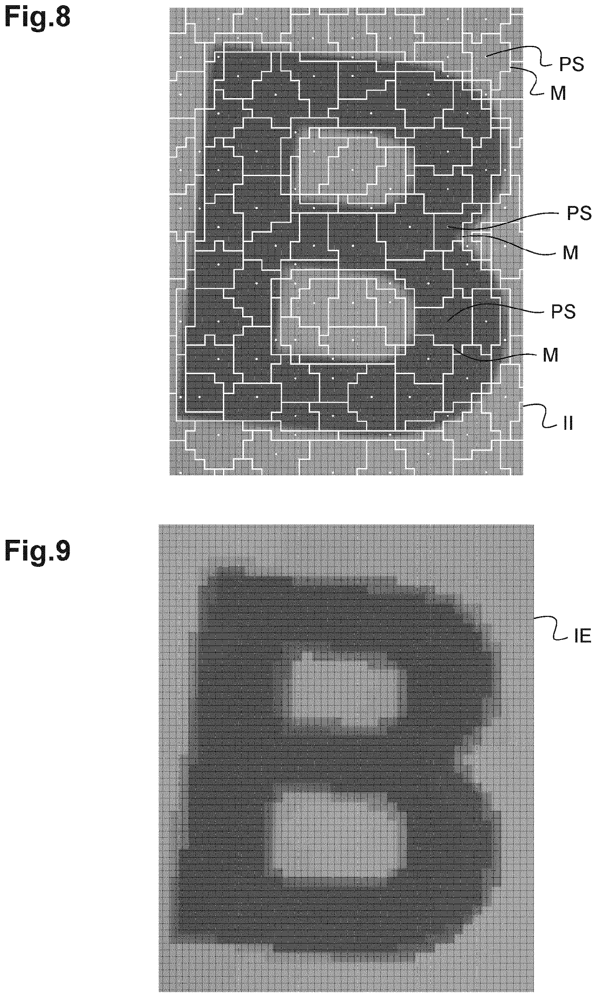

Dans l'image structurelle estimée IE, l'intensité d'un pixel qui n'est pas un pixel source PS peut être déterminée sur la base du pixel source PS le plus proche, c'est-à-dire possédant l'écart le plus faible. Tous les pixels dont l'intensité est estimée sur la base d'un pixel source PS forment une maille M associée à ce pixel source PS. La figure 8, montre en superposition avec une partie de l'image initiale II, centrée sur la lettre B, la localisation des pixels sources PS pour un facteur d'accélération de 20 et leur maille associé M.

La figure 9 montre l'image structurelle estimée IE de l'échantillon 1 correspondant à la figure 8. Le facteur d'accélérations, ici de 20, permet de déterminer les N/20 positions de mesure les plus contributives correspondant à N/20 pixels sources PS de l'image initiale II.

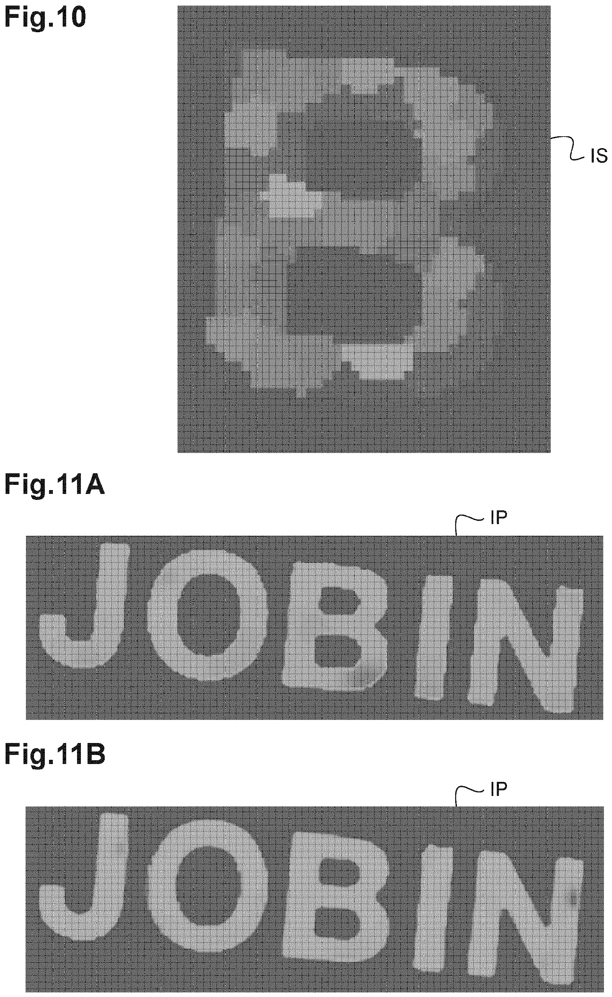

La figure 10 est un grossissement de l'image de spectrométrie IS de la figure 7C centrée sur la lettre B, et obtenue avec le même facteur d'accélération de 20.

De façon remarquable, la résolution spatiale de l'image structurelle estimée IE de la figure 9 est très proche de celle de la figure 10 puisque ces deux images ont été construites selon un processus analogue, l'une sur la base des N/20 pixels sources PS, l'autre sur la base des N/20 mesures de spectrométries acquises aux positions de mesure PM les plus contributives.

Cette estimation de l'image de spectroscopie IS, grâce à l'image structurelle estimée IE, peut par exemple aider un utilisateur à sélectionner un facteur d'accélération donné.

De façon remarquable, les étapes e3 et e4 sont itérées pour améliorer la résolution spatiale de l'image de spectrométrie IS, à chaque nouvelle itération, le groupe déterminé à l'étape e3 comprend uniquement des positions de mesure PM pour lesquelles une mesure de spectrométrie reste à acquérir, c'est-à-dire des positons de mesures restantes. En d'autres termes, pour chaque itération de l'étape e3, les positions de mesure PM pour lesquelles une mesure de spectrométrie a été acquise ne sont pas prises en compte lors de la détermination du groupe. A chaque nouvelle itération de l'étape e3, grâce au classement effectué à l'étape e2, le groupe est donc déterminé en sélectionnant les positions de mesure restantes les plus contributives.

Par exemple, lors d'une première itération des étapes e3 et e4, N/100 mesures de spectrométrie sont acquises aux N/100 positions de mesure PM les plus contributives. Cela permet d'obtenir une image de spectrométrie IS avec un facteur d'accélération de 100. Lors d'une deuxième itération, N/100 autres mesures de spectrométrie sont acquises aux N/100 positions de mesure suivantes les plus contributives. La deuxième itération permet d'obtenir une image de spectrométrie IS avec un facteur d'accélération de 50.

Dans cet exemple, la trajectoire du faisceau d'excitation 2 par rapport à l'échantillon 1 peut être optimisée lors de chaque itération, c'est-à-dire pour chaque groupe de N/100 positions de mesure PM.

Lors des différentes itérations des étapes e3 et e4, les différents groupes peuvent aussi avoir un nombre de positions de mesure PM différent. Cela est par exemple le cas si le nombre de positions de mesure PM par groupe est déterminé de façon à obtenir une distance parcourue par le faisceau d'excitation 2 par rapport à l'échantillon 1 donnée.

Plusieurs conditions d'arrêt du procédé d'acquisition et de formation d'une image de spectrométrie IS peuvent être mises en œuvre et parfois combinées entre elles.

Une première condition d'arrêt peut être que le nombre de mesures de mesure de spectrométrie à acquérir soit prédéterminé.

Cette première condition d'arrêt correspond par exemple au cas où le facteur d'accélération souhaité de l'image de spectrométrie est donné. Par exemple, si le facteur d'accélération à atteindre est de 10, le nombre de mesures de spectrométrie à acquérir est de N/10. Grâce au procédé d'acquisition, les N/10 mesures sont alors acquises aux N/10 positions de mesure les plus contributives, ce qui permet d'obtenir une image de très bonne qualité pour un facteur d'accélération déterminé.

Pour cette première condition d'arrêt, on peut prévoir que le groupe, déterminé à l'étape e3, contienne un nombre P de positions de mesure PM égal au nombre de mesures de spectrométrie à acquérir et que la trajectoire du faisceau d'excitation soit optimisée sur l'ensemble des P positions de mesure PM du groupe. Cela permet d'obtenir une image de spectrométrie IS au facteur d'accélération déterminée en un minimum de temps.

Une deuxième condition d'arrêt peut être que la durée d'acquisition soit prédéterminée. Le procédé d'acquisition et de formation de l'image de spectrométrie IS permet alors d'obtenir une image de spectrométrie IS de meilleure qualité que les procédés de l'état de l'art pour une durée d'acquisition donnée.

Le nombre de positions de mesure PM par groupe peut être prédéterminé, par exemple fixé à N/100 pour correspondre à un pas d'acquisition de 1% des mesures de spectrométrie pouvant être acquises.

Une troisième condition d'arrêt peut être que le procédé comprenne une mesure d'arrêt pour mettre fin, par exemple lors de l'étape e4, à l'acquisition de mesures de spectrométrie supplémentaires. L'acquisition de nouvelles mesures de spectrométrie peut alors être arrêtée à n'importe quel moment, y compris avant d'atteindre un facteur d'accélération donné ou une durée d'acquisition donnée.

Cette mesure d'arrêt peut par exemple consister en une entrée utilisateur. L'entrée utilisateur peut être réalisée par exemple via un périphérique de type clavier relié au calculateur. Ainsi, si l'utilisateur estime que la qualité de l'image de spectrométrie IS, construite à un instant donné avec un certain nombre de mesures de spectrométrie, est satisfaisante, il peut décider de stopper l'acquisition de nouvelles mesures de spectrométrie. Cela signifie ici que l'utilisateur peut mettre fin, quand il le souhaite, au procédé d'acquisition et de formation de l'image de spectrométrie IS.

Selon un mode de réalisation particulier et avantageux, comme le montre la figure 3, l'étape e4 comprend ici la sous-étape e43.

A l'étape e43, le calculateur interpole l'image de spectrométrie IS en déterminant une pluralité de coefficients d'interpolation sur la base des écarts entre les positions de mesure PM. Une fois l'image de spectrométrie IS construite aux étape e41 et e42, l'interpolation permet d'améliorer le rendu visuel de l'image de spectrométrie IS.

Cette interpolation permet d'ajuster les valeurs de spectrométrie en fonction des valeurs de spectrométrie voisines. Les figures 11A et 11B illustrent l'étape d'interpolation, permettant de former des images interpolées IP, appliquée respectivement aux images de spectrométrie IS des figures 7A et 7B. Les L'interpolation peut par exemple être une interpolation polynomiale.

Ici, les coefficients d'interpolation sont déterminés sur la base des écarts entre les positions de mesure PM. Les coefficients d'interpolation sont inversement proportionnels aux écarts.

Par exemple, plus l'écart entre deux positions de mesure PM est faible, plus le coefficient d'interpolation entre les deux valeurs de spectrométrie associées à ces deux positions de mesure PM est élevé. Ainsi, pour une position de mesure PM donnée, sa valeur de spectrométrie est principalement ajustée sur la base des positions de mesure proches, spatialement et en termes d'intensité.

Comme le montre les figures 11A et 11B, l'étape e43 d'interpolation de l'image de spectrométrie IS peut permettre d'obtenir plus rapidement une image interpolée IP de qualité jugée satisfaisante par un utilisateur.

Dans le cadre de la troisième condition d'arrêt, la mesure d'arrêt peut alors être déclenchée plus rapidement, sur la base de l'image interpolée IP, ce qui représente un gain de temps.

Etapes optionnelles

Comme le montre la figure 3, on peut prévoir que le procédé d'acquisition comprenne une étape e11.

A l'étape e11, au moins une mesure de spectrométrie initiale est acquise en au moins une position de mesure initiale prédéterminée, une valeur de classement prédéterminée est attribuée à chaque position de mesure initiale.

Lors de la construction des listes S et U, le calculateur place les position de mesure initiale dans la liste U puisque celles-ci possèdent des valeurs de classement.

En pratique, plusieurs mesures de spectrométrie initiales sont acquises à l'étape e11. Ces mesures de spectrométrie sont par exemple réparties sur une grille initiale de pas supérieurs aux pas DX et DY de la grille sur laquelle sont réparties l'ensemble N des positions de mesure PM.

Par exemple avec un pas 10 fois supérieur à DX et DY respectivement dans la direction X et la direction Y. La grille initiale comprend N/100 des N positions de mesure PM. Acquérir des mesures à ces N/100 positions de mesure PM permet d'obtenir une image de spectrométrie IS avec un facteur d'accélération de 100, c'est-à-dire en 1% de la durée d'acquisition standard.

Cela permet de former rapidement, une image de spectrométrie IS de faible qualité mais recouvrant l'ensemble de l'échantillon 1. Ensuite, des mesures de spectrométrie sont acquises aux autres positions de mesure les plus contributives pour augmenter rapidement la qualité de l'image de spectrométrie IS.

Les valeurs de classement des positions de mesure initiales sont attribuées façon à ne pas perturber le classement des autres positions de mesure PM. Les valeurs de classement peuvent par exemple toutes être fixées à la même valeur, par exemple à la valeur d'initialisation décrite plus haut.

Il est ensuite simple de définir un critère associé à ces positons de mesure initiales pour que les positions de mesure initiales ne soient pas prises en compte lors de la détermination du groupe à l'étape e3. Cela signifie que les positions de mesure initiales sont considérées comme des positions de mesure acquises.

Les positions de mesure initiales sont placées dans la liste U. En effet, à l'étape 2, les positions de mesure initiales sont prises en compte dans l'attribution des valeurs de classement des autres positions de mesure PM.

De façon remarquable, on peut prévoir de prédéterminer une région d'intérêt dans l'image initiale II comprenant une partie seulement des positions de mesure PM et à l'étape e3 le groupe peut alors être déterminé sur la base des positions de mesure PM appartenant à la région d'intérêt.

La région d'intérêt peut par exemple être définie par l'utilisateur sur l'image initiale II. L'utilisateur peut par exemple dessiner un rectangle ou un cercle sur l'image initiale. Les coordonnées des positions de mesure PM permettent de déterminer lesquelles se situent dans la région d'intérêt.

La surface de la région d'intérêt est plus petite que la zone de l'échantillon 1. Par conséquent, seulement une partie de l'ensemble des N positions de mesure PM se situe dans la région d'intérêt. Lors de l'étape e3, les positions de mesure PM du groupe sont alors sélectionnées uniquement parmi celles appartenant à la région d'intérêt.

A l'étape e4, les mesures de spectrométrie sont donc acquises uniquement à des positions de mesure PM appartenant à la région d'intérêt.

Déterminer une région d'intérêt permet donc d'acquérir des mesures de spectrométrie uniquement à un endroit particulier de l'échantillon 1. La résolution spatiale et la qualité de l'image de spectrométrie IS augmentent donc uniquement dans cet endroit particulier. Pour augmenter la qualité de l'image de spectrométrie IS dans la région d'intérêt, les étapes e3 et e4 peuvent être itérées en considérant uniquement les positions de mesure PM dans la région d'intérêt.

Déterminer une région d'intérêt permet d'affiner l'image de spectrométrie IS, c'est-à-dire augmenter sa résolution spatiale, uniquement dans un endroit particulier de l'échantillon 1. L'utilisateur peut être exemple définir une région d'intérêt là où l'échantillon 1 présente de forts contrastes et des fréquences spatiales élevées.

La région d'intérêt peut aussi être définie sur la base de l'image de spectrométrie IS pour affiner une région de l'image de spectrométrie IS qui ne présente pas de contrastes forts sur l'image initiale II, c'est-à-dire une région où les positions de mesure PM ne sont pas nécessairement considérées comme très contributives. L'utilisateur peut par exemple définir la région d'intérêt là où il pressent que de forts contrastes sur l'image de spectrométrie IS. La région d'intérêt peut aussi être définie de façon automatique. Par exemple, une zone de l'échantillon 1 qui présente des variations de valeurs de spectrométrie sur l'image de spectrométrie IS mais qui ne présente pas de variations d'intensité particulières sur l'image initiale II, peut définir une région d'intérêt.

De nouvelles mesures de spectrométrie peuvent être acquises hors de la région d'intérêt par exemple une fois que toutes les positions de mesure de la zone d'intérêt sont acquises ou après une durée déterminée ou encore une fois que la partie de l'image de spectrométrie IS correspondant à la région d'intérêt atteint un facteur d'accélération déterminée.

De façon remarquable, on peut prévoir d'intégrer spatialement une mesure de spectrométrie sur un secteur de l'échantillon 1.

L'intégration spatiale d'une mesure peut être réalisée en déplaçant le faisceau d'excitation 2 par rapport à l'échantillon 1 pendant la durée d'acquisition de la mesure. L'intégration spatiale d'une mesure peut aussi être réalisée en élargissant les dimensions transverses du faisceau d'excitation 2 lors de l'acquisition de la mesure.

Cela est particulièrement utile lorsqu'une mesure de spectrométrie sert à estimer les valeurs de spectrométrie de plusieurs positions de mesure restantes voisines. Intégrer spatialement la mesure permet d'obtenir une valeur de spectrométrie moyenne pour ce voisinage. Une telle valeur moyenne peut être plus représentative de l'échantillon 1 qu'une mesure de spectrométrie ponctuelle appliquée aux valeurs de spectrométrie voisines. Les images estimées peuvent permettre d'estimer si une mesure de spectrométrie est susceptible de servir ou non à la détermination de valeurs de spectrométrie de positions de mesure restantes PMR.

## Revendications

1. Procédé d'acquisition et de formation d'une image de spectrométrie (IS) d'un échantillon (1) comprenant les étapes suivant :

   e1) acquisition d'une image initiale (II) d'une zone de l'échantillon (1), l'image initiale (II) étant composée de pixels, et définition d'un ensemble maximal de N, $2 \leq N$, positions de mesure (PM) de spectrométrie, chaque position de mesure (PM) comprenant au moins une coordonnée (CX ; CY), représentative de la position de mesure (PM) par rapport à la zone de l'échantillon (1), et au moins une intensité (IR1 ; IR2 ; IG1 ; IG2 ; IB1 ; IB2), déterminée sur la base d'au moins un pixel de l'image initiale (II) situé dans un voisinage de la position de mesure (PM) ;

   e2) attribution d'une valeur de classement à chacune des N positions de mesure (PM) sur la base d'écarts entre les positions de mesure (PM), un écart entre deux positions de mesure (PM) étant calculé sur la base d'une différence d'intensité (IR1 ; IR2 ; IG1 ; IG2 ; IB1 ; IB2) et d'une différence de coordonnées (CX ; CY) ;

   e3) détermination d'un groupe de P, $1 \leq P \leq N$, positions de mesure (PM) parmi l'ensemble des N positions de mesure (PM) en fonction des valeurs de classement attribuées à l'étape e2) ;

   e4) successivement, pour chaque position de mesure (PM) du groupe déterminée à l'étape e3), positionnement d'un faisceau d'excitation (2) en ladite position de mesure (PM) sur la zone de l'échantillon (1), acquisition d'une mesure de spectrométrie et construction de l'image de spectrométrie (IS) sur la base de la ou des mesures de spectrométrie acquises.

2. Procédé selon la revendication 1, dans lequel l'écart entre deux positions de mesure (PM) est calculé sur la base d'une somme pondérée du carré de la différence d'intensité (IR1 ; IR2 ; IG1 ; IG2 ; IB1 ; IB2) entre les deux positions de mesure (PM) et du carré de la différence de coordonnée (CX ; CY) entre les deux positions de mesure (PM).

3. Procédé selon l'une des revendications 1 à 2, dans lequel à l'étape e2), les valeurs de classement attribuées sont toutes différentes les unes des autres.

4. Procédé selon l'une des revendications 1 à 3, dans lequel à l'étape e3), les P positions de mesure (PM) du groupe sont déterminées en fonction d'un ordre croissant, respectivement décroissant, des valeurs de classement.

5. Procédé selon l'une des revendications 1 à 4, dans lequel à l'étape e2), une liste S comprenant les positions de mesure (PM) dont la valeur de classement reste à attribuer et une liste U comprenant les positions de mesure (PM) dont la valeur de classement est attribuée sont initialisées, et les étapes suivantes e21) et e22) sont itérées :

  e21) pour chaque position de mesure (PM) de la liste S, détermination d'une erreur totale en itérant les étapes e211), e212) et e213) de :

  e211) déplacement de la position de mesure considérée de la liste S à la liste U ;
  e212) calcul de l'erreur totale associée à la position de mesure considérée sur la base d'écarts entre des positions de mesure (PM) de la liste S et des positions de mesure (PM) de la liste U ;
  e213) déplacement de la position de mesure considérée de la liste U à la liste S ;

  e22) sélection d'une position de mesure (PM) de la liste S sur la base de chaque erreur totale déterminée à l'étape e21), attribution d'une valeur de classement à la position de mesure sélectionnée et déplacement de la position de mesure sélectionnée de la liste S à la liste U.

6. Procédé selon la revendication 5, dans lequel une valeur de classement est initialisée à une valeur prédéterminée et à chaque itération de l'étape e22), une valeur de classement strictement inférieure, respectivement supérieure, à la valeur de classement la plus faible, respectivement la plus élevée, est attribuée à la position de mesure (PM) possédant l'erreur totale la plus faible.

7. Procédé selon l'une des revendications 5 à 6, dans lequel à l'étape e212), la détermination de l'erreur totale associée à la position de mesure considérée comprend les étapes suivantes :

  e2121) pour chaque position de mesure (PM) de la liste U, détermination de la position de mesure (PM) de la liste S avec laquelle l'écart est minimum, la valeur de l'écart entre ces deux positions de mesure (PM) définissant un écart minimum ;
  e2122) calcul de l'erreur totale sur la base de chaque écart minimum déterminé à l'étape e2121).

8. Procédé selon l'une des revendication 1 à 7, dans lequel le groupe comprend au moins trois positions de mesure (PM) et dans lequel une trajectoire pour effectuer les positionnements successifs du faisceau d'excitation (2) est prédéterminée.

9. Procédé selon l'une des revendication 1 à 8, dans lequel les étapes e3) et e4) sont itérées et dans lequel à chaque nouvelle itération, le groupe déterminé à l'étape e3) comprend uniquement des positions de mesure (PM) pour lesquelles une mesure de spectrométrie reste à acquérir.

10. Procédé selon l'une des revendication 1 à 9, comprenant une étape e11) d'acquisition d'au moins une mesure de spectrométrie en au moins une position de mesure prédéterminée, une valeur de classement prédéterminée est attribuée à chaque au moins une position de mesure prédéterminée.

11. Procédé selon l'une des revendications 1 à 10, dans lequel la construction de l'image de spectrométrie (IS) comprend les étapes suivantes :

  e41) pour chaque position de mesure (PM) pour laquelle une mesure de spectrométrie a été acquise, détermination d'une valeur de spectrométrie sur la base de ladite mesure de spectrométrie ;
  e42) pour chaque position de mesure restante, détermination d'une valeur de spectrométrie sur la base d'au moins une mesure de spectrométrie sélectionnée, qui est sélectionnée en fonction de la différence de coordonnées entre ladite position de mesure de restante et la position de mesure (PM) à laquelle ladite au moins une mesure de spectrométrie sélectionnée a été acquise.

12. Procédé selon la revendication 11, dans lequel à l'étape e42), les mesures de spectrométries sélectionnées sont les mesures de spectrométrie acquises à des positions de mesure (PM) possédant une différence de coordonnées avec ladite position de mesure restante inférieure à une valeur seuil.

13. Procédé selon l'une des revendications 10 à 11, dans lequel, à l'étape e42), la valeur de spectrométrie est déterminée sur la base de chaque mesure de spectrométrie sélectionnée pondérée par l'écart entre la position de mesure (PM) à laquelle la mesure de spectrométrie sélectionnée a été acquise et ladite position de mesure restante.

14. Procédé selon l'une des revendication 1 à 13, comprenant une étape e43) d'interpolation de l'image de spectrométrie (IS) dans laquelle une pluralité de coefficients d'interpolation sont déterminés sur la base des écarts entre les positions de mesure (PM).

15. Procédé selon l'une des revendications 1 à 14, comprenant une mesure d'arrêt pour mettre fin, à l'étape e4), à l'acquisition de mesures de spectrométrie supplémentaires.

16. Procédé selon l'une des revendications 1 à 15, dans lequel le nombre de mesures de spectrométrie à acquérir est prédéterminé.

17. Procédé selon l'une des revendications 1 à 16, dans lequel une région d'intérêt, comprenant une partie seulement des positions de mesure (PM), est prédéterminée dans l'image initiale (II), et à l'étape e3) le groupe est déterminé sur la base des positions de mesure (PM) appartenant à la région d'intérêt.

18. Procédé selon l'une des revendications 1 à 17, dans lequel au moins une mesure de spectrométrie est intégrée spatialement sur un secteur de l'échantillon (1).

19. Procédé selon l'une des revendications 1 à 18, dans lequel l'image initiale (II) est acquise selon l'une des modalités d'imagerie suivantes :

    - acquisition spectroscopique à une ou plusieurs bandes spectrales prédéterminées ;
    - acquisition optique en réflexion ou en transmission ;
    - acquisition hyperspectrale ;
    - acquisition de microscope à force atomique ;
    - acquisition de microscope électronique à balayage.

20. Appareil de mesure spectroscopique comprenant :

    - une source de lumière conçue pour générer un faisceau d'excitation (2) ;
    - un support adapté à recevoir un échantillon (1) ;
    - un dispositif de capture d'image ;
    - un processeur programmé pour mettre en œuvre les étapes e1) à e4) du procédé selon l'une des revendications 1 à 19.

**Patentansprüche**

1. Verfahren zur Erfassung und Bildung eines spektroskopischen Bilds (IS) einer Probe (1) mit den folgenden Schritten:

    e1) Erfassen eines Ausgangsbilds (II) einer Zone der Probe (1), wobei das Ausgangsbild (II) aus Pixeln zusammengesetzt ist, und Definieren einer Gesamtheit von maximal N spektrometrischen Meßpositionen (PM), $2 \leq N$, wobei jede Meßposition (PM) mindestens eine Koordinate (CX; CY), die für die Meßposition (PM) in Bezug auf die Zone der Probe (1) steht, und mindestens eine Stärke (IR1; IR2; IG1; IG2; IB1; IB2), die auf der Grundlage wenigstens eines in einer Umgebung der Meßposition gelegenen Pixels des Ausgangsbilds (II) bestimmt worden ist, aufweist;
    e2) Zuteilen eines Einstufungswerts an jede der N Meßpositionen (PM) auf der Grundlage von Abständen zwischen den Meßpositionen (PM), wobei ein Abstand zwischen zwei Meßpositionen (PM) auf der Grundlage eines Stärkeunterschieds (IR1; IR2; IG1; IG2; IB1; IB2) und eines Koordinatenunterschieds (CX; CY) berechnet wird;

e3) Bestimmen einer Gruppe von P Meßpositionen (PM), $1 \leq P \leq N$, aus der Gesamtheit von N Meßpositionen (PM) in Abhängigkeit von den im Schritt e2) zugeteilten Einstufungswerten;

e4) für jede Meßposition (PM) der im Schritt e3) bestimmten Gruppe nacheinander: Positionieren eines Erregerstrahls (2) auf der Meßposition (PM) in der Zone der Probe (1), Erfassen einer spektrometrischen Messung und Aufbauen des spektrometrischen Bilds (IS) auf der Grundlage der erfaßten spektrometrischen Messung beziehungsweise Messungen.

2. Verfahren gemäß Anspruch 1, bei dem der Abstand zwischen zwei Meßpositionen (PM) auf der Grundlage einer gewichteten Summe des Quadrats der Stärkeunterschiede (IR1; IR2; IG1; IG2; IB1; IB2) zwischen den beiden Meßpositionen (PM) und des Quadrats der Koordinatenunterschiede (CX; CY) zwischen den beiden Meßpositionen (PM) berechnet wird.

3. Verfahren gemäß einem der Ansprüche 1 bis 2, bei dem sich beim Schritt e2) die zugeteilten Einstufungswerte alle voneinander unterscheiden.

4. Verfahren gemäß einem der Ansprüche 1 bis 3, bei dem beim Schritt e3) die P Meßpositionen (PM) der Gruppe in Abhängigkeit von einer aufsteigenden beziehungsweise absteigenden Reihenfolge der Einstufungswerte bestimmt werden.

5. Verfahren gemäß einem der Ansprüche 1 bis 4, bei dem beim Schritt e2) eine Liste S, die die Meßpositionen (PM) enthält, deren Einstufungswert noch zuzuteilen ist, und eine Liste U, die die Meßpositionen (PM) enthält, deren Einstufungswert zugeteilt worden ist, eingerichtet werden und die folgenden Schritte mehrfach wiederholt durchgeführt werden:

e21) für jede Meßposition (PM) der Liste S: Bestimmen eines Gesamtfehlers durch mehrfach wiederholtes Durchführen der Schritte e211), e212) und e213) des e211) Verlegens der betreffenden Meßposition (PM) der Liste S zur Liste U;

e212) Berechnens des zur betreffenden Meßposition (PM) gehörenden Gesamtfehlers auf der Grundlage von Abständen zwischen Meßpunkten (PM) der Liste S und Meßpunkten (PM) der Liste U;

e213) Verlegens der betreffenden Meßposition (PM) von der Liste U zur Liste S;

e22) Auswählen einer Meßposition (PM) der Liste S auf der Grundlage jedes beim Schritt e21) bestimmten Gesamtfehlers, Zuteilen eines Einstufungswerts an die ausgewählte Meßposition und Verlegen der ausgewählten Meßposition von der Liste S zur Liste U.

6. Verfahren gemäß Anspruch 5, bei dem ein Einstufungswert bei einem vorbestimmten Wert angefangen wird, und bei jeder Wiederholung des Schritts e22) ein Einstufungswert, der strikt niedriger beziehungsweise höher als der schwächste beziehungsweise stärkste Einstufungswert ist, der Meßposition (PM) zugeordnet wird, die den kleinsten Gesamtfehler aufweist.

7. Verfahren gemäß einem der Ansprüche 5 bis 6, bei dem beim Schritt e212) das Bestimmen des der betreffenden Meßposition zugeordneten gesamten Fehlers die folgenden Schritte aufweist:

e2121) für jede Meßposition (PM) der Liste U, Bestimmen der Meßposition (PM) der Liste S, zu der der Abstand der geringste ist, wobei der Wert des Abstands zwischen diesen beiden Meßpositionen (PM) einen minimalen Abstand definiert;

e2122) Berechnen des Gesamtfehlers auf der Grundlage jedes beim Schritt e2121) bestimmten minimalen Abstands.

8. Verfahren gemäß einem der Ansprüche 1 bis 7, bei dem die Gruppe mindestens drei Meßpositionen aufweist und bei dem ein Weg zum Ausführen der aufeinanderfolgenden Positionierungen des Erregerstrahls (2) vorbestimmt wird.

9. Verfahren gemäß einem der Ansprüche 1 bis 8, bei dem die Schritte e3) und e4) mehrfach wiederholt werden und bei dem bei jeder neuen Wiederholung die im Schritt e3) bestimmte Gruppe nur die Meßpositionen (PM) aufweist, für die noch eine spektrometrische Messung zu erfassen ist.

10. Verfahren gemäß einem der Ansprüche 1 bis 9, mit einem Schritt e11) des Erfassens wenigstens einer spektrometrischen Messung an mindestens einer vorbestimmten Meßposition, wobei ein vorbestimmter Einstufungswert jeder mindestens einen vorbestimmten Meßposition zugeordnet wird.

11. Verfahren gemäß einem der Ansprüche 1 bis 10, bei dem das Aufbauen des spektrometrischen Bilds (IS) die folgenden Schritte aufweist:

e41) für jede Meßposition (PM), für die eine spektrometrische Messung erfaßt worden ist, Bestimmen eines Spektrometriewerts auf der Grundlage der besagten spektrometrischen Messung;
e42) für jede verbleibende Meßposition, Bestimmen eines Spektrometriewerts auf der Grundlage mindestens einer ausgesuchten spektrometrischen Messung, die in Abhängigkeit vom Unterschied der Koordinaten zwischen der verbleibenden Meßposition und der Meßposition (PM), an der die besagte mindestens eine ausgesuchte spektrometrische Messung erfaßt worden ist, ausgesucht wird.

12. Verfahren gemäß Anspruch 11, bei dem beim Schritt e42) die ausgesuchten spektrometrischen Messungen die spektrometrischen Messungen sind, die an Meßpositionen (PM) erhalten worden sind, die einen Unterschied der Koordinaten zur besagten verbleibenden Meßposition von weniger als einem Schwellenwert aufweisen.

13. Verfahren gemäß einem der Ansprüche 10 bis 11, bei dem beim Schritt e42) der Spektrometriewert auf der Grundlage jeder ausgesuchten spektrometrischen Messung durch den Abstand zwischen der Meßposition (PM), an der die ausgesuchte Spektroskopische Messung erfaßt worden ist, und der verbleibenden Meßposition bestimmt wird gewichtet wird.

14. Verfahren gemäß einem der Ansprüche 1 bis 13, mit einem Schritt e43) der Interpolation des spektrometrischen Bild (IS), bei der eine Anzahl Interpolationskoeffizienten auf der Grundlage der Unterschiede zwischen den Meßpositionen (PM) bestimmt werden.

15. Verfahren gemäß einem der Ansprüche 1 bis 14, mit einer Schlußmessung, um beim Schritt e4) das Erfassen zusätzlicher spektrometrischer Messungen zu beenden.

16. Verfahren gemäß einem der Ansprüche 1 bis 15, bei dem die Anzahl zu erfassender spektrometrischer Messungen vorbestimmt ist.

17. Verfahren gemäß einem der Ansprüche 1 bis 16, bei dem im Ausgangsbild (II) ein Interessengebiet mit nur einem Teil der Meßpositionen (PM) vorbestimmt ist und beim Schritt e3) die Gruppe auf der Grundlage der Meßpositionen (PM) bestimmt wird, die zum Interessengebiet gehören.

18. Verfahren gemäß einem der Ansprüche 1 bis 17, bei dem mindestens eine spektrometrische Messung räumlich in einen Sektor der Probe (1) integriert wird.

19. Verfahren gemäß einem der Ansprüche 1 bis 18, bei dem das Ausgangsbild (II) unter einer der folgenden Bildgebungsbedingungen erfaßt wird:

- spekroskopisches Erfassen in einem oder mehreren vorbestimmten Spektralbändern;
- optisches Erfassen als Reflexion oder im Durchlicht;
- hyperspektrales Erfassen;
- Erfassen mit einem Atomkraftmikroskop ;
- Erfassen mit einem Rasterelektronenmikroskop.

20. Spektroskopisches Meßgerät mit:

- einer zum Erzeugen eines Anregungsstrahls (2) ausgelegten Lichtquelle;
- einem zum Aufnehmen einer Probe (1) ausgelegten Träger;
- einer Bildaufnahmevorrichtung;
- einem Prozessor, der für die Durchführung der Schritte e1) bis e4) des Verfahrens gemäß einem der Ansprüche 1 bis 19 programmiert ist.

**Claims**

1. Method of acquiring and forming a spectrometry image (IS) of a sample (1) comprising the following steps:

   e1) acquisition of an initial image (II) of an area of the sample (1), the initial image (II) being composed of pixels, and definition of a maximum set of N, $2 \leq N$, spectrometry measurement positions (PM), each measurement position (PM) comprising at least one coordinate (CX ; CY), representative of the measurement position (PM) with respect to the area of the sample (1), and at least one intensity (IR1; IR2; IG1; IG2; IB1; IB2), determined on the basis of at least one pixel of the initial image (II) located in a neighborhood of the measurement position (PM);
   e2) assignment of a classification value to each of the N measurement positions (PM) on the basis of deviations between the measurement positions (PM), a deviation between two measurement positions (PM) being calculated on the basis of an intensity difference (IR1; IR2; IG1; IG2; IB1; IB2) and a coordinate difference (CX; CY) ;
   e3) determination of a group of P, $1 \leq P \leq N$, measurement positions (PM) among the set of N measurement positions (PM) as a function of the classification values assigned in step e2);
   e4) successively, for each measurement position (PM) of the group determined in step e3), positioning of an excitation beam (2) at said measurement position (PM) on the area of the sample (1), acquiring a spectrometry measurement and constructing the spectrometry image (IS) based on the acquired spectrometry measurement(s).

2. Method according to claim 1, wherein the deviation between two measurement positions (PM) is calculated on the basis of a weighted sum of the square of the difference in intensity (IR1; IR2; IG1; IG2; IB1; IB2) between the two measurement positions (PM) and the square of the coordinate difference (CX; CY) between the two measurement positions (PM).

3. Method according to any one of claims 1 to 2, wherein in step e2), the assigned classification values are all different from one another.

4. Method according to any one of claims 1 to 3, wherein in step e3), the P measurement positions (PM) of the group are determined according to an ascending, respectively descending order of the classification values.

5. Method according to any one of claims 1 to 4, wherein in step e2), a list S comprising the measurement positions (PM) whose classification value remains to be assigned and a list U comprising the measurement positions (PM) whose classification value is assigned are initialized, and the following steps e21) and e22) are iterated:

   e21) for each measurement position (PM) of the list S, determination of a total error by iterating steps e211), e212) and e213) of:
   e211) moving of the considered measurement position from the list S to the list U;
   e212) calculation of the total error associated with the considered measurement position on the basis of deviations between measurement positions (PM) of the list S and measurement positions (PM) of the list U;
   e213) moving of the considered measurement position from the list U to the list S;
   e22) selecting a measurement position (PM) from the list S on the basis of each total error determined in step e21), assigning a classification value to the selected measurement position and moving the selected measurement position from list S to list U.

6. Method according to claim 5, wherein a classification value is initialized to a predetermined value and at each iteration of step e22), a classification value strictly lower, respectively higher, than the lowest, respectively highest, classification value is assigned to the measurement position (PM) with the lowest total error.

7. Method according to any one of claims 5 to 6, wherein in step e212), the determination of the total error associated with the considered measurement position comprises the following steps:

   e2121) for each measurement position (PM) of list U, determination of the measurement position (PM) of list S with which the deviation is minimum, the value of the deviation between these two measurement positions (PM) defining a minimum deviation;
   e2122) calculation of the total error on the basis of each minimum deviation determined in step e2121).

8. Method according to any one of claims 1 to 7, wherein the group comprises at least three measurement positions (PM) and wherein a trajectory for carrying out the successive positionings of the excitation beam (2) is predetermined.

9. Method according to any one of claims 1 to 8, wherein steps e3) and e4) are iterated and wherein at each new iteration, the group determined in step e3) comprises only measurement positions (PM) for which a spectrometric measurement remains to be acquired.

10. Method according to any one of claims 1 to 9, comprising a step e11) of acquiring at least one spectrometry measurement in at least one predetermined measurement position, a predetermined classification value is assigned to each at least one predetermined measurement position.

11. Method according to any one of claims 1 to 10, wherein the construction of the spectrometry image (IS) comprises the following steps:

e41) for each measurement position (PM) for which a spectrometry measurement has been acquired, determining a spectrometry value based on said spectrometry measurement;
e42) for each remaining measurement position, determining a spectrometry value on the basis of at least one selected spectrometry measurement, which is selected as a function of the coordinate difference between said remaining measurement position and the measurement position (PM) at which said at least one selected spectrometry measurement was acquired.

12. Method according to claim 11, wherein in step e42), the selected spectrometry measurements are the spectrometry measurements acquired at measurement positions (PM) having a difference in coordinates with said remaining measurement position less than a threshold value.

13. Method according to any one of claims 10 to 11, wherein, in step e42), the spectrometry value is determined on the basis of each selected spectrometry measurement weighted by the deviation between the measurement position (PM) at which the selected spectrometry measurement was acquired and said remaining measurement position.

14. Method according to any one of claims 1 to 13, comprising a step e43) of interpolating the spectrometry image (IS) in which a plurality of interpolation coefficients is determined on the basis of the deviations between the measurement positions (PM).

15. Method according to any one of claims 1 to 14, comprising a stopping measure to end, in step e4), the acquisition of additional spectrometry measurements.

16. Method according to any one of claims 1 to 15, wherein the number of spectrometry measurements to be acquired is predetermined.

17. Method according to any one of Claims 1 to 16, wherein a region of interest, comprising only part of the measurement positions (PM), is predetermined in the initial image (II), and in step e3) the group is determined based on the measurement positions (PM) belonging to the region of interest.

18. Method according to any one of claims 1 to 17, wherein at least one spectrometric measurement is spatially integrated over a sector of the sample (1).

19. Method according to any one of claims 1 to 18, wherein the initial image (II) is acquired according to one of the following imaging methods:

- spectroscopic acquisition at one or more predetermined spectral bands;
- optical acquisition in reflection or in transmission;
- hyperspectral acquisition;
- acquisition by atomic force microscope;
- acquisition by scanning electron microscope.

20. Spectroscopic measuring apparatus comprising:

- a light source designed to generate an excitation beam (2);
- a support adapted to receive a sample (1);

- an image capture device;
- a processor programmed to implement steps e1) to e4) of the method according to any one of claims 1 to 19.

# Fig.1

# Fig.2

# Fig.3

# Fig.4

# Fig.5

# Fig.6

# Fig.7A

# Fig.7B

# Fig.7C

**Fig.7D**

IS

**Fig.7E**

IS

**Fig.7F**

IS

**Fig.8**

- PS
- M

- PS

- M

- PS

- M

- II

**Fig.9**

IE

**Fig.10**

IS

**Fig.11A**

IP

**Fig.11B**

IP

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20190086262 A1

**Littérature non-brevet citée dans la description**

- **KONG et al.** Diagnosis of tumors during tissue-conserving surgery with integrated autofluorescence and Raman scattering microscopy. *PNAS*, 2013, vol. 110 (38), 15189-15194